(19) Europäisches Patentamt

European Patent Office

Office européen des brevets

(11) **EP 4 611 288 A1**

(12) **EUROPEAN PATENT APPLICATION**
published in accordance with Art. 153(4) EPC

(43) Date of publication:
**03.09.2025 Bulletin 2025/36**

(21) Application number: **23920536.2**

(22) Date of filing: **10.02.2023**

(51) International Patent Classification (IPC):
*H04L 1/00* (2006.01)        *H04W 24/08* (2009.01)

(52) Cooperative Patent Classification (CPC):
**H04L 1/00; H04W 24/08**

(86) International application number:
**PCT/CN2023/075513**

(87) International publication number:
**WO 2024/164328 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **New H3C Technologies Co., Ltd.**
**Hangzhou, Zhejiang 310052 (CN)**

(72) Inventors:
• **KONG, Lei**
  **Beijing 100102 (CN)**
• **ZHOU, Lei**
  **Beijing 100102 (CN)**

(74) Representative: **IPAZ**
**Bâtiment Platon**
**Parc Les Algorithmes**
**91190 Saint-Aubin (FR)**

(54) **CROSS LINK INTERFERENCE MEASUREMENT METHOD AND APPARATUS, BASE STATION, AND CONTROLLER**

(57)     A cross link interference (CLI) measurement method and apparatus, a base station, and a controller, relating to the technical field of communications. A controller sends configuration information of an interference measurement window to a victim base station, and sends resource configuration information of measurement signals to the victim base station and an interference base station; the interference base station sends the measurement signals to the victim base station by using different beams; the victim base station measures the CLI value of the beam corresponding to each measurement signal in the interference measurement window, and reports the beam measurement result to the controller; the controller performs coordinated scheduling between the base stations on the basis of the beam measurement result. By applying the technical solution provided by embodiments of the present application, CLI in an F-TDD communication system can be suppressed, the performance of the F-TDD communication system is improved, the complexity of performing interference measurement by a victim base station can be reduced, and the energy of the victim base station is conserved.

receiving within an interference measurement window, different measurement signals transmitted by an aggressor base station using different beams, the measurement signals correspond to the beams one by one, and the different beams have different directions — S21

measuring, for each measurement signal, a CLI value of a beam corresponding to the measurement signal — S22

FIG. 2

**Description**

**TECHNICAL FIELD**

The present disclosure relates to the technical field of communication, and in particular to a method and apparatus for measuring cross link interference, base station and controller.

**BACKGROUND**

In a 5G-Adv communication system, beamforming technology is used to improve edge coverage of cells, reduce interference between users, and improve overall performance of system. In a 5G-Adv Flexible Time Division Duplex (F-TDD) system, there is Cross Link Interference (CLI) between base stations. CLI levels are different for different beam directions. CLI can affect reception of base stations and user equipment (UE), which results in a decrease in signal-to-noise ratio for reception and an increase in bit error rate, thus ultimately affecting the overall performance of the 5G-Adv communication system. Therefore, it is necessary to adopt appropriate technologies to suppress CLI in different beam directions in a Flexible Time Division Duplex (F-TDD) communication system and improve the performance of the F-TDD communication system.

**SUMMARY**

Examples of the present disclosure aim to provide a method, apparatus for measuring cross link interference, a base station and a controller, so as to suppress CLI in different beam directions in an F-TDD communication system and improve the performance of the F-TDD communication system.

In a first aspect, an example of the present disclosure provides a method for measuring cross link interference, applied to a victim base station, wherein the method includes:

receiving within an interference measurement window, different measurement signals transmitted by an aggressor base station using different beams, wherein the measurement signals correspond to the beams one by one, and the different beams have different directions; and

measuring, for each measurement signal, a cross link interference CLI value of a beam corresponding to the measurement signal.

In a second aspect, an example of the present disclosure provides a method for measuring cross link interference, applied to an aggressor base station, wherein at least one measurement signal is configured in the aggressor base station, time-frequency domain resources occupied by some or all of the at least one measurement signal are within an interference measurement window, the at least one measurement signal corresponds to beams one by one, and different beams have different directions; the method includes:

obtaining second resource configuration information of the aggressor base station, wherein the second resource configuration information indicates time-frequency domain resources occupied by the at least one measurement signal; and

transmitting the at least one measurement signal to a victim base station by using different beams according to the second resource configuration information.

In a third aspect, an example of the present disclosure provides a method for measuring cross link interference, applied to a controller, wherein the method includes:

obtaining second configuration information of an interference measurement window in a victim base station and second resource configuration information for measurement signals of each aggressor base station, wherein the second configuration information indicates slots occupied by the interference measurement window, and the second resource configuration information of each aggressor base station indicates time-frequency domain resources occupied by each measurement signal in the aggressor base station; the measurement signals correspond to beams one by one in each aggressor base station, and different beams have different directions; and

sending the second configuration information to the victim base station, sending the second resource configuration information for each aggressor base station to the aggressor base station, and sending first resource configuration information to the victim base station, wherein the first resource configuration information comprises an identity of the first resource configuration information and the second resource configuration information of each aggressor base station, and the identity of the first resource configuration information corresponds to the victim base station one by one.

In a fourth aspect, an example of the present disclosure provides an apparatus for measuring cross link interference, applied to a victim base station, wherein the apparatus includes:

a first reception unit, to receive within an interference measurement window, different measurement signals transmitted by an aggressor base station using different beams, wherein the measurement signals correspond to the beams one by one, and the different beams have different directions; and

a measurement unit, to measure, for each measurement signal, a cross link interference CLI value of a beam corresponding to the measurement signal.

In a fifth aspect, an example of the present disclosure provides an apparatus for measuring cross link interference, applied to an aggressor base station, wherein at least one measurement signal is configured in the aggressor base station, time-frequency domain resources occupied by some or all of the at least one measurement signal are within an interference measurement window, the at least one measurement signal corresponds to beams one by one, and different beams have different directions; the apparatus includes:

an acquisition unit, to obtain second resource configuration information of the aggressor base station, wherein the second resource configuration information indicates time-frequency domain resources occupied by the at least one measurement signal;

a transmission unit, to transmit the at least one measurement signal to a victim base station by using different beams according to the second resource configuration information.

In a sixth aspect, an example of the present disclosure provides an apparatus for measuring cross link interference, applied to a controller, wherein the apparatus includes:

an acquisition unit, to obtain second configuration information of an interference measurement windows in a victim base station and second resource configuration information for measurement signals of each aggressor base station, wherein the second configuration information indicates slots occupied by the interference measurement windows, and the second resource configuration information of each aggressor base station indicates time-frequency domain resources occupied by each measurement signal in the aggressor base station; the measurement signals correspond to beams one by one in each aggressor base station, and different beams have different directions; and

a first sending unit, to send the second configuration information to the victim base station, sending the second resource configuration information for each aggressor base station to the aggressor base station, and sending first resource configuration information to the victim base station, wherein the first resource configuration information comprises an identity of the first resource configuration information and the second resource configuration information of each aggressor base station, and the identity of the first resource configuration information corresponds to the victim base station one by one.

In a seventh aspect, an example of the present disclosure provides a base station including a processor, a communication interface, a memory and a communication bus, wherein the processor, the communication interface and the memory communicate with each other through the communication bus;

the memory is to store computer programs;
the processor is to carry out, when executing the programs stored in the memory, the method provided by in the first aspect or the second aspect.

In an eighth aspect, an example of the present disclosure provides a controller including a processor, a communication interface, a memory and a communication bus, wherein the processor, the communication interface and the memory communicate with each other through the communication bus;

the memory is to store computer programs;
the processor is to carry out, when executing the programs stored in the memory, the method provided in the third aspect.

In a ninth aspect, an example of the present disclosure provides a computer-readable storage medium having computer programs stored therein, wherein the computer programs, when executed by a processor, carry out the method provided in the first aspect or the second aspect or the third aspect.

In a tenth aspect, an example of the present disclosure provides a computer program product which, when run on a computer, causes the computer to execute the method provided in the first aspect or the second aspect or the third aspect.

In technical solutions provided by examples of the present disclosure, the aggressor base station transmits measurement signals to the victim base station by using different beams, and then the victim base station measures different measurement signals within an interference measurement window, so as to obtain CLI values of different measurement signals, i.e., CLI values of beams corresponding to different measurement signals. Based on the CLI values of different beams, corresponding technologies for suppressing the CLI values can be obtained so as to assist time-frequency resource scheduling among base stations, suppress CLI in different beam directions in the F-TDD communication system and improve the performance of the F-TDD communication system. In addition, the victim base station measures the measurement signals corresponding to different beams only within the interference measurement window, which reduces the complexity of interference measurement by the victim base station and saves energy of the victim base station.

## BRIEF DESCRIPTION OF THE DRAWINGS

The accompanying drawings described herein are provided to provide a further understanding of the present disclosure and constitute a part of the present disclosure. Illustrative examples of the present disclosure and their descriptions are used to explain the present disclosure and do not constitute undue limitations on the present disclosure.

Fig. 1 is a schematic diagram of different base stations in a two-layer network structure;
Fig. 2 is a first schematic flow diagram of a method for measuring CLI provided by an example of the present disclosure;
Fig. 3 is a schematic diagram of a two-layer network structure provided by an example of the present disclosure;
Fig. 4 is a schematic diagram of configuration of an interference measurement window and SSB beam provided by an example of the present disclosure;
Fig. 5 is a schematic diagram of configuration of an interference measurement window and CSI-RS beam provided by an example of the present disclosure;
Fig. 6 is a second schematic flow diagram of a method for measuring CLI provided by an example of the present disclosure;
Fig. 7 is a third schematic flow diagram of a method for measuring CLI provided by an example of the present disclosure;
Fig. 8 is a fourth schematic flow diagram of a method for measuring CLI provided by an example of the present disclosure;
Fig. 9 is a first schematic structure diagram of an apparatus for measuring CLI provided by an example of the present disclosure;
Fig. 10 is a second schematic structure diagram of an apparatus for measuring CLI provided by an example of the present disclosure;
Fig. 11 is a third schematic structure diagram of an apparatus for measuring CLI provided by an example of the present disclosure;
Fig. 12 is a schematic structure diagram of a base station provided by an example of the present disclosure;
Fig. 13 is a schematic structure diagram of a controller provided by an example of the present disclosure.

## DETAILED DESCRIPTION

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure. All other examples obtained based on the examples of the present disclosure by those skilled in the art fall into the scope of protection of the present disclosure.

The expressions appearing in the examples of the present disclosure will be explained below.

Macro base station: a large base station, which needs to be mounted on an iron tower, generally has three sectors, omnidirectional coverage, and has large power, a wide coverage area, and carries a high number of users.

Micro base station: a small base station installed in a building or in a dense area, which is small in size, small in power, small in coverage area and carries a low number of users.

Victim base station: a base station that is interfered with in the flexible time division duplex (F-TDD) communication system. In the example of the present disclosure, the victim base station can be the next generation node base station (gNB) or the evolved node base station (eNB), etc.

Aggressor base station: a base station that interferes with the victim base station in the flexible time division duplex (F-TDD) communication system. In the example of the present disclosure, the aggressor base station can be gNB or eNB, etc.

At present, Time Division Duplex (TDD) communication system operates in a Half-Duplex (HD) mode for communication. In the HD mode, a frame structure is strictly divided into Downlink (DL) slot, Uplink (UL) slot and Special (S) slot, wherein the S slot can be used for DL, UL or Guard Period (GP). In order to improve throughput of a network, more DL slots are usually configured in 5G commercial networks, which causes fewer UL slots, limited UL transmission rate, and leads to larger UL transmission delay, which is not conducive to ultra-reliability low latency communication (URLLC) services such as automatic control and control-to-control.

Flexible Time Division Duplex (F-TDD) communication system is a feasible technical solution to solve the above problem. F-TDD is also known as dynamic TDD, it can flexibly allocate UL slot and DL slot according to the service conditions of DL, so as to meet the requirements of dynamic business changes and improve the performance of 5G communication system. For the F-TDD communication system, there are two typical network deployment scenarios: one is a single-layer network structure, that is, all base stations in the network are of the same type, such as the macro base station or micro base station; the other is a two-layer network structure, wherein the first layer of the network is a macro base station, which is generally deployed outdoors, and the second layer is a micro base station, which is generally deployed indoors.

For the single-layer network, different base stations adopt a flexible frame structure; for the two-layer network, the macro base station can be configured as a DL-based frame structure. For example, the frame structure of five slots is DDDSU, wherein D represents a DL slot, S represents a special slot, and U represents a UL slot; the micro base station in the second layer can be configured as a flexible frame structure. For example, the frame structure of five slots is FFFFF, wherein F represents a flexible slot, and the micro base station in the second layer can also be configured as a UL-based main frame structure. For example, the frame structure of five slots is DSUUU, wherein D represents a DL slot, S represents a special slot, and U represents a UL slot.

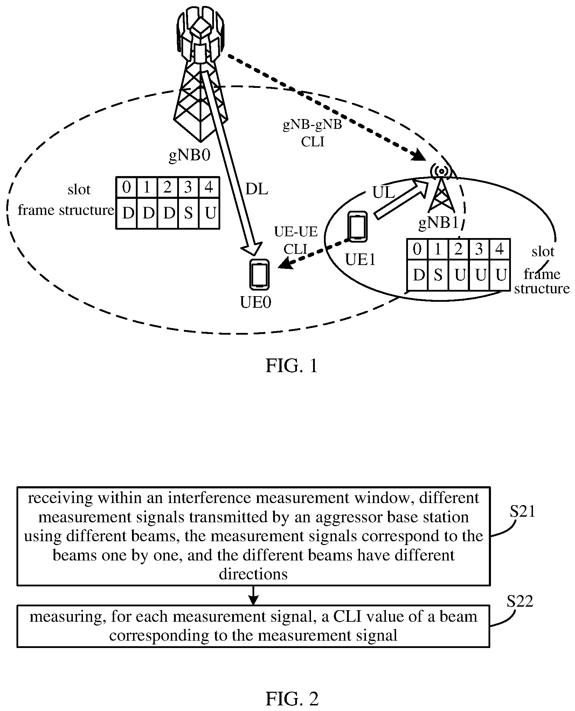

Fig. 1 shows a schematic diagram of different base stations in the two-layer network structure, in which the base stations include gNB0 and gNB1, gNB0 is the macro-base station and a dotted circle represents coverage area of gNB0; and gNB1 is the micro-base station, and a solid circle represents coverage area of gNB1. In slots #0-#4, the frame structure of gNB0 is DDDSU, and the frame structure of gNB1 is DSUUU. As shown in Fig. 1, in slot #2, transmission directions of two base stations gNB0 and gNB1 are different, where gNB0 transmits DL data to UE0, and gNB1 receives UL data from UE1. In this case, DL transmission of gNB0 will interfere with UL reception of gNB1, i.e., gNB-gNB CLI; and UL transmission of UE1 will interfere with DL reception of UE0, i.e., UE-UE CLI. Here, gNB-gNB CLI and UE-UE CLI have different interference levels in different beam directions.

The above two kinds of CLI will affect reception of the base station and UE, which will reduce the signal-to-noise ratio of reception and increase the bit error rate, and ultimately affect the overall performance of the 5G-Adv communication system. Therefore, it is necessary to adopt an appropriate technology to suppress CLI in the F-TDD communication system and improve the performance of the F-TDD communication system. Coordinated scheduling among gNBs is a feasible technology to suppress CLI in the F-TDD communication system, but the premise of coordinated scheduling is that gNBs need to exchange various system configuration information with each other, including frame structure, bandwidth configuration, channel and signal configuration, and measurement report of mutual interference among base stations.

In order to achieve the coordinated scheduling among base stations, to suppress CLI in different beam directions in the F-TDD communication system and reduce an influence of CLI on the performance of the 5G-Adv communication system, an example of the present disclosure provides a method for measuring CLI, in which an aggressor base station transmit measurement signals to a victim base station by using different beams, and then the victim base station measures the measurement signals transmitted by the aggressor base station, thereby estimating CLI values of different beams. Based on the CLI values of different beams, corresponding CLI suppression techniques can be obtained, which can assist scheduling of time-frequency resources among base stations, suppress CLI in the F-TDD communication system, and reduce the influence of CLI on the performance of the 5G-Adv communication system.

The method for measuring CLI provided by the examples of the present disclosure will be described in detail through specific examples.

Referring to Fig. 2, Fig. 2 is a first schematic flow diagram of a method for measuring CLI provided by an example of the present disclosure, which is applied to a victim base station. The victim base station can correspond to one or more aggressor base stations, that is, the one or more aggressor base stations interfere with the victim base station. The method for measuring CLI includes:

Block S21: receiving within an interference measurement window, different measurement signals transmitted by an aggressor base station using different beams, wherein the measurement signals correspond to the beams one by one, and the different beams have different directions; and

Block S22: measuring, for each measurement signal, a cross link interference CLI value of a beam corresponding to the measurement signal.

In technical solutions provided by examples of the present disclosure, the aggressor base station transmits measurement signals to the victim base station by using different beams, and then the victim base station measures different measurement signals within the interference measurement window, so as to obtain CLI values of different measurement signals, i.e., CLI values of beams corresponding to different measurement signals. Based on the CLI values of different beams, corresponding technologies for suppressing CLI can be obtained so as to assist time-frequency resource scheduling among base stations, suppress CLI in different beam directions in the F-TDD communication system and improve the performance of the F-TDD communication system. In addition, the victim base station measures the measurement signals corresponding to different beams only within the interference measurement window, which reduces the complexity of interference measurement by the victim base station and saves energy of the victim base station.

In the above block S21, the measurement signal may be an intrinsic signal transmitted by the aggressor base station or an extrinsic signal transmitted by the aggressor base station.

For example, the measurement signal can be a Synchronization Signal Block (SSB), where SSB is the inherent signal transmitted by the aggressor base station and is a non-zero power signal; the measurement signal can also be a Channel State Information-Reference Signal (CSI-RS), where the CSI-RS is the extrinsic signal transmitted by the aggressor base station and is a non-zero power signal. The SSB corresponds to a coarse beam one by one, that is, the base station transmits the SSB by using the coarse beam; and the CSI-RS corresponds to a fine beam one by one, that is, the base station transmits the CSI-RS by using the fine beam, and a plurality of fine beams are included in a range of the coarse beam. In examples of the present disclosure, the coarse beam corresponding to the SSB can be called a SSB beam, and the fine beam corresponding to the CSI-RS can be called a CSI-RS beam.

In different aggressor base stations, configuration of measurement signals (such as the SSB and CSI-RS described above) may be the same or different. In response to determining that the measurement signals of each aggressor base station are configured in different slots, it is necessary for the victim base station to perform CLI measurement in all of slots configured with a measurement signal, which not only increases the complexity of interference measurement by the victim base station, but also is not conducive to energy saving of the victim base station. In technical solution provided by the example of the present disclosure, the victim base station is configured with an interference measurement window, and the victim base station performs CLI measurement of beams only within the interference measurement window. This technology not only reduces the complexity of interference measurement by the victim base station, but also saves energy of the victim base station.

In order to enable the victim base station to effectively complete the CLI measurement of beams, in the aggressor base station, the measurement signals can be configured within the interference measurement window, and the measurement signals can be transmitted within the interference measurement window. That is, one or more measurement signals are configured in the aggressor base station, and the one or more measurement signals include one or more measurement signals transmitted within the interference measurement window.

In practical application, the base station can be divided into a full-duplex base station and a half-duplex base station. In response to determining that both the victim base station and the aggressor base station are full-duplex base stations, the interference measurement window occupies any one or more continuous slots, that is, one interference measurement window can be configured at any position without limitation. In response to determining that both the victim base station and the aggressor base station are half-duplex base stations, the interference measurement window occupies any one or more continuous designated slots which are flexible slots, or are uplink slots of the victim base station and downlink slots of the aggressor base station. In response to determining that the victim base station is a full-duplex base station and the aggressor base station is a half-duplex base station, the interference measurement window occupies any one or more continuous designated slot which are downlink slots of the aggressor base station. In response to determining that the victim base station is a half-duplex base station and the aggressor base station is a full-duplex base station, the interference measurement window occupies any one or more continuous designated slots which are uplink slots of the victim base station.

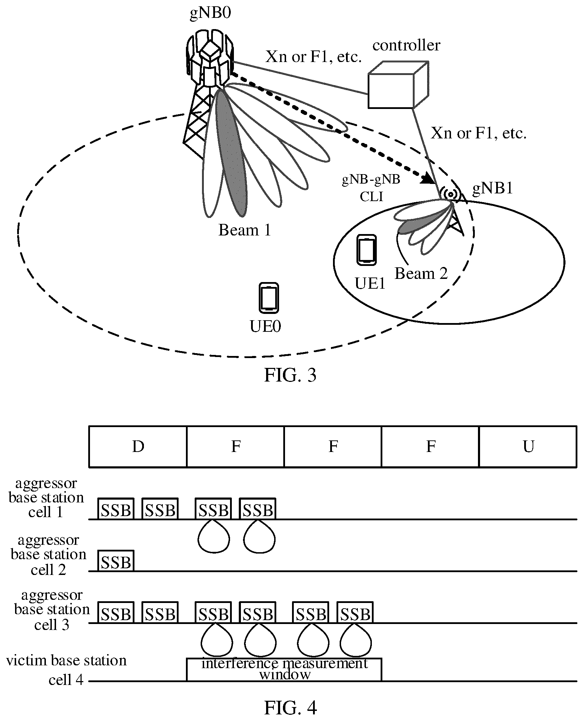

There are one or more interference measurement windows, that is, one or more interference measurement windows can be configured in the victim base station, and each of the interference measurement windows has a unique Identify (ID), wherein a validated interference measurement window is used for measuring CLI, that is, the victim base station measures, based on measurement signals received within the validated interference measurement window, a CLI value of a beam corresponding to each of the measurement signals. In order to control the validated interference measurement window in the victim base station, a controller can be added in the F-TDD communication system. As shown in Fig. 3, configuration and activation of the interference measurement windows in the victim base station can be performed by the controller. In Fig. 3, elongated oval patterns represent beams for transmitting signals. The controller may be any base station in the F-TDD communication system, a Central Unit (CU) in the F-TDD communication system, or other devices in the F-TDD communication system, which is not limited. With a backhaul link (such as Xn interface or F1 interface) or Over-the-Air Technology (OTA), the controller can perform configuration of the interference measurement windows and exchange necessary configuration information needed by the victim base station and the aggressor base station in CLI measurement, wherein the necessary configuration information can include but not limited to frame structure configuration information, Bandwidth Part (BWP) configuration information, beam configuration information, CLI resource configuration information, CLI reporting configuration information, time-frequency resource configuration information of channels and signals, power parameters, etc. The time-frequency resource configuration information of channels and signals may include SSB, CSI-RS, Physical Downlink Control Channel (PDCCH), Physical Downlink Shared Channel (PDSCH) signal, Physical Uplink Control Channel (PUCCH) signal, Physical Uplink Shared Channel (PDSCH) signal, PUSCH), Physical Random Access Channel (PRACH), Sounding Reference Signal (SRS), etc.

In examples of the present disclosure, the controller can send configuration information of the interference measurement windows to the victim base station. For the convenience of description and understanding, the configuration information of the interference measurement windows will be referred to as second configuration information. After receiving the second configuration information, the victim base station can activate a default interference measurement window among all interference measurement windows based on the received second configuration information of the interference measurement windows, that is, validate the default interference measurement window among all interference measurement windows. The default interference measurement window can be a first interference measurement window configured in the victim base station or another designated interference measurement window. In examples of the present disclosure, the controller can also send the configuration information of the interference measurement windows to the aggressor base station. After receiving the second configuration information, the aggressor base station can activate the default interference measurement window among a plurality of interference measurement windows.

The controller can also send an activation message, such as a second activation message, to the victim base station, and the second activation message includes an identity of an interference measurement window to be activated. After receiving the second activation message sent by the controller, in response to determining that a next frame structure period is reached, the victim base station invalidates the validated interference measurement window, and validates the interference measurement window to be activated according to the second activation message. In this way, the controller activates only one interference measurement window in the victim base station at a time, which avoids the mutual interference of a plurality of interference measurement windows and improves accuracy of CLI measurement of beams. The controller can also send the second activation message to the aggressor base station as described above to activate a required interference measurement window.

In addition, in examples of the present disclosure, once the controller configures the configuration information of the interference measurement windows in the victim base station, the victim base station can activate the default interference measurement window. In response to determining that it is necessary to change the activated interference measurement window, the controller sends the second activation message to the victim base station to change the activated interference measurement window. It can be seen that the victim base station activates one interference measurement window once configured with the configuration information of the interference measurement windows, which ensures the CLI measurement.

In examples of the present disclosure, the second configuration information of one interference measurement window indicates slots occupied by the interference measurement window. The second configuration information of each interference measurement window can include one or more configuration parameters selected from the following: a reference Sub Carrier Space (SCS) of the interference measurement window, a length of the interference measurement window, a period of the interference measurement window and an offset of the interference measurement window in one frame structure period.

(1) The reference SCS of the interference measurement window is a fixed SCS or a SCS of the victim base station.

In order to avoid differences of SCSs between the aggressor base station and the victim base station, it is necessary to specify the reference SCS of the interference measurement window. The reference SCS of the interference measurement window can be determined in following two methods:

in a first method, the reference SCS is fixed as a certain SCS, that is, the reference SCS is a fixed SCS. For example, Frequency Range (FR) 1 is fixed at 15 KHz, and FR 2 is fixed at 60 KHz.
in a second method, the reference SCS is determined based on the SCS of the victim base station, that is, the reference SCS can be the SCS of the victim base station. In this way, the victim base station and the aggressor base station can determine other parameters such as the length, period and offset of the interference measurement window through their own SCSs. In the second method, the reference SCS of the interference measurement window can be {15 KHz, 30 KHz, 60 KHz, 120 KHz}.

Compared with the second method, the first method does not need to introduce new configuration parameters. Once the frequency range is specified, the controller, the aggressor base station and the victim base station can clearly specify the reference SCS. However, in response to determining that actual SCSs of the aggressor base station and the victim base station are different from the reference SCS, additional calculation will be introduced. In examples of the present disclosure, in response to determining that the reference SCS is not configured, the victim base station can determine the reference SCS by default using the first method. In response to determining that the reference SCS is clearly configured, the victim base station determines the reference SCS using the second method.

(2) The length of the interference measurement window is smaller than or equal to the frame structure period.

The length of the interference measurement window is directly related to the frame structure period. Once the reference SCS is determined, the number of slots in one frame structure period is determined. The interference measurement window does not exceed the frame structure period at most. As an example, taking slot as a unit of the interference measurement window, the length of the interference measurement window can be {1, 2, 4, 5, 8, 10, 16, 20, 32, 40, 64, 80, 128, 160}.

For example, in response to determining that the frame structure period comprises 20 slots, the maximum length of the interference measurement window is 20 slots; and in response to determining that the frame structure period comprises 160 slots, the maximum length of the interference measurement window is 160 slots.

(3) The period of the interference measurement window is an integer multiple of the frame structure period.

The period of the interference measurement window is also directly related to the frame structure period. The period of the interference measurement window can be configured as an integer multiple of the frame structure period. As an example, taking a slot as the unit of the interference measurement window, the period of the interference measurement window can be N*{1, 2, 4, 5, 8, 10, 16, 20, 32, 40, 64, 80, 128, 160, where N is a positive integer, and for example, N can be {1, 2, 4, 8}. Based on this, a maximum value of N is 8, and a maximum value of the frame structure period is 160 slots. Therefore, the period of the interference measurement window does not exceed 8*160=1280, that is, the period of the interference measurement window can be {1, 2, 4, 5, 8, 10, 16, 20, 32, 40, 64, 80, 128, 160, 256, 320, 512, 640, 1024, 1280}.

Considering that a maximum value of SCS of the base station is 120 KHz, each slot accounts for 0.125 ms, and 0.125 ms*1280=160ms. Based on this, the period of the interference measurement window does not exceed 160 ms.

(4) The offset of the interference measurement window in one frame structure period does not exceed a last slot in the frame structure period.

The offset of the interference measurement window is a specific offset of the interference measurement window in the frame structure period, and the offset of the interference measurement window is within a range of the frame structure period. As an example, taking a slot as the unit of the interference measurement window, the offset of the interference measurement window in one frame structure period can be {0, ..., 159}. At this time, a sum of the offset of the interference measurement window and the length of the interference measurement window may exceed the frame structure period. A part of the interference measurement window that exceeds the frame structure period is invalid, that is, the part of the interference measurement window that exceeds the frame structure period cannot be used for measuring CLI.

In order to improve comprehensiveness and accuracy of CLI measurement of beams, the sum of the offset and the length of the interference measurement window in one frame structure period does not exceed the last slot in the frame structure period, that is, the interference measurement window does not exceed the last slot in the frame structure period. That is to say, the interference measurement window is completely located in one frame structure period, and the whole interference measurement window can be used for measuring CLI.

The second configuration information of the interference measurement window can also be converted to have a unit of *ms.* The second configuration information can be converted to have the unit of *ms* only according to a time length of slots under the reference SCS.

In examples of the present disclosure, a maximum number of interference measurement windows that can be configured in the victim base station can be 2, 4 or 8, etc. In response to determining that it is necessary to update the activated interference measurement window, the controller can send an identity of an interference measurement window that needs to be activated to the victim base station through additional information, such as the above second activation message, which takes effect in a period of the interference measurement window next to the period of the interference measurement window in which the second activation message is sent, that is, takes effect in the next frame structure period. In examples of the present disclosure, the controller can also send the second configuration information of the interference measurement windows to the aggressor base station, and validate the interference measurement window that needs to be activated through the second activation message, which is not limited.

For example, the measurement signal is SSB, and the frame structures of the victim base station and the aggressor base station are DFFFU, where D represents the DL slot, U represents the UL slot and F represents the flexible slot. A base station is a cell, and the configuration of the interference measurement window and SSB beams is shown in Fig. 4. There are four cells in Fig. 4, namely, three aggressor base stations- cells 1-3, and a victim base station- cell 4. In cell 1, SSBs are configured in the D slot and a first F slot; in cell 2, SSBs are configured in the D slot; in cell 3, SSBs are configured in the D slot, the first F slot and a second F slot. Only a part of SSB beams, such as water drop-shaped patterns, are shown in Fig. 4. In cell 4 of the victim base station, the interference measurement window is configured in the first F slot and the second F slot. Based on this, the victim base station can measure the CLI of SSB beams in cell 1 and cell 3 to the victim base station within the interference measurement window. However, no SSB is configured in the first F slot and the second F slot in cell 2, so the victim base station cannot measure the CLI of SSB beams in cell 2 to the victim base station within the interference measurement window.

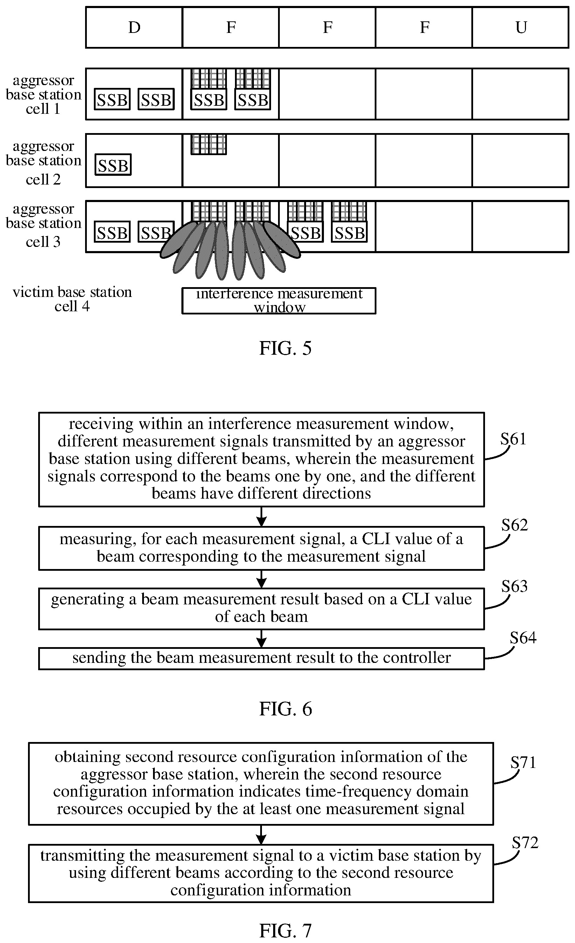

SSB can only be configured in a first half of a frame in a SSB configuration period, and the interference measurement window may not completely cover all SSBs, such as the SSB in cell 2 in Fig. 4. In order to enable the victim base station to measure all possible aggressor beams, a plurality of CSI-RSs can be configured in the interference measurement window, and each of the CSI-RSs corresponds to a fine beam, thus realizing beam coverage. For a mapping relationship between coarse beams and fine beams, a plurality of fine beams, such as 2, 4, 8, etc., can be included in the range of one coarse beam. The specific number of fine beams and the time-frequency domain resource configuration of corresponding CSI-RSs can be configured by the controller according to the number of SSBs of the aggressor base station and a position of the interference measurement window, so as to configure CSI-RSs in the interference measurement window and send specific configuration information to the aggressor base station and the victim base station. As shown in Fig. 5, Fig. 5 shows the configuration of the interference measurement window and CSI-RS beams, wherein four CSI-RS beams are included in the range of each SSB beam, and each CSI-RS beam corresponds to one CSI-RS. Fig. 5 shows a part of CSI-RS beams, such as elliptical patterns; rectangular boxes with grid shading represent the resource configuration of CSI-RSs.

In examples of the present disclosure, time domain resources occupied by SSB corresponding to one SSB beam may be the same as or different from time domain resources occupied by CSI-RSs corresponding to a plurality of CSI-RS beams within the range of the SSB beam. Frequency domain resources occupied by SSB corresponding to one SSB beam may be the same as or different from frequency domain resources occupied by CSI-RSs corresponding to a plurality of CSI-RS beams within the range of the SSB beam. Time-frequency domain resources occupied by SSB corresponding to one SSB beam are different from time-frequency domain resources occupied by CSI-RSs corresponding to a plurality of CSI-RS beams within the range of the SSB beam.

In examples of the present disclosure, the measurement signals (such as SSB and CSI-RS described above) can be divided into measurement signals for CLI measurement and measurement signals for CLI beam management. Two kinds of measurement signals with different purposes can be configured independently, that is, one is used for measuring CLI and the other is used for CLI beam management. Two kinds of measurement signals with different purposes can also be configured as a same measurement signal, which is not only used for measuring CLI, but also for CLI beam management. In examples of the present disclosure, two kinds of measurement signals with different purposes are collectively referred to as measurement signals.

The premise of CLI measurement among base stations is that configuration information has been synchronized among the base stations. There may be a plurality of aggressor base stations and a plurality of victim base stations at the same time among a plurality of base stations controlled by one controller. The controller can configure the time-frequency domain resources occupied by the measurement signals in the aggressor base stations, that is, send the resource configuration information of the measurement signals such as the second resource configuration information of the aggressor base stations to the aggressor base stations, and the second resource configuration information indicates the time-frequency domain resources occupied by each measurement signal in the aggressor base stations. The aggressor base stations can transmit measurement signals to the victim base station by using different beam according to the second resource configuration information. At the same time, the controller can also inform the victim base station of the second resource configuration information of the aggressor base stations, so that the CLI measurement for beams can be carried out subsequently.

The controller configures resource configuration information for CLI measurement, such as first resource configuration information, for each victim base station. The first resource configuration information includes ID of the first resource configuration information and the second resource configuration information of each aggressor base station, and the ID of the first resource configuration information corresponds to the ID of the victim base station one by one. The victim base station receives the first resource configuration information sent by the controller and then can complete the CLI measurement for beams based on the first resource configuration information, and obtain a specific beam measurement result of a beam corresponding to each measurement signal, so as to forbid beams for data transmission in respective aggressor base stations.

One beam or a plurality of beams can be configured in the aggressor base station. For the plurality of beams, the beams can be coarse beams or fine beams, and the two kinds of beams can coexist at the same time. Therefore, SSB resources corresponding to the coarse beams and CSI-RS resources corresponding to the fine beams can be configured in the aggressor base station. The resource configuration information of SSB can also be called the resource configuration information of SSB beam, and the resource configuration information of CSI-RS can also be called the resource configuration information of CSI-RS beam.

For the coarse beams, each of the coarse beams corresponds to SSB, and can also be called a SSB beam. In order to enable the victim base station to measure CLI values brought by SSB beams in the aggressor base station, it is necessary to exchange the resource configuration information of SSB beams (such as the second resource configuration information described above) among different base stations. The exchange can be carried out by the controller, which sends the resource configuration information of SSB beams of each aggressor base station to the victim base station respectively.

The resource configuration information of SSB beams in all aggressor base stations constitutes an SSB configuration set. In the SSB configuration set, the resource configuration information of SSB beams in one aggressor base station may include the unique ID of the aggressor base station and configuration information of all SSBs in the aggressor base station, etc. The configuration information of each SSB may include a resource ID of the SSB, a period, a location of time-frequency domain resources of the SSB, and so on. The configuration information of SSBs indicates time-frequency domain resources occupied by each SSB.

A maximum number of pieces of the resource configuration information of SSB beams that can be configured in a single controller is the same as a maximum number of base stations that can be controlled by the single controller, and the value of the maximum number of pieces of the resource configuration information of SSB beams is determined according to actual situations, and can be for example 16, 32, 64, etc. A maximum number of SSBs that can be configured by a single base station can be 64, 128, etc.

For the fine beams, the controller can configure a corresponding measurement signal for each of the fine beams, so that the fine beams correspond to the measurement signals one by one, wherein the signal for CLI measurement can be CSI-RS and be recorded as CLI-RS, and a fine beam corresponding to each CLI-RS is recorded as a CLI-RS beam. In order to distinguish it from CSI-RS currently used for other purposes, in examples of the present disclosure, an indication parameter corresponding to CLI, such as cli-info, is introduced into the resource configuration information of CLI-RS (such as the second resource configuration information described above). In response to determining that the resource configuration information of CLI-RS includes the indication parameter corresponding to CLI, it is indicated that the CLI-RS is used for measuring CLI for a beam corresponding to the CLI-RS.

In order to enable the victim base station to measure CLI values of CLI-RS beams of the aggressor base stations, it is necessary to exchange the resource configuration information of CLI-RS among different base stations. In practice, the controller sends the resource configuration information of CLI-RS of each aggressor base station to the victim base station to complete the exchange of beam information such as the resource configuration information among base stations.

The resource configuration information of CLI-RS of each aggressor base station can include the unique ID of the aggressor base station and the configuration information of CLI-RS of the aggressor base station. The resource configuration information of CLI-RS of the aggressor base station can include the configuration information of all CLI-RSs in the aggressor base station. The configuration information of all CLI-RSs can include resource IDs, periods, types, power configuration, time-frequency resource locations and the like of the respective CLI-RSs.

The number of pieces of the resource configuration information of CLI-RS configured for each aggressor base station and the ID of the resource configuration information of each CLI-RS can be configured according to actual situations. For example, the maximum number of pieces of the configurable resource configuration information of CLI-RS can be 16, 32, 64, etc. The resource configuration information of CLI-RS can include a plurality of CLI-RS resource sets, and each of the CLI-RS resource sets includes a plurality of CLI-RS resources, and each of the CLI-RS resources has its unique ID. The configuration of the CLI-RS resource sets and CLI-RS resources can refer to the configuration of CSI-RS resources in a current 5G communication system, but the difference is that a specified parameter *cli-info* introduced above needs to be additionally introduced into a CSI-RS resource set to indicate that the CSI-RS resource set is used for measuring CLI for beams. The signal type of CSI-RS used for measuring CLI for beams can be configured periodic, aperiodic or semi-persistent.

The aggressor base stations transmit measurement signals by using different beams according to the second resource configuration information. The victim base station receives at least one measurement signal transmitted by the aggressor base stations within the interference measurement window, and then performs Block S22 of measuring the measurement signals such as SSB or CLI-RS within the interference measurement window to obtain CLI values of different beams between the aggressor base station and the victim base station, that is, to obtain a CLI value of each beam. In examples of the present disclosure, the CLI value can be determined based on Reference Signal Received Power (SS-RSRP) or Received Signal Strength Indicator (RSSI), which is not limited.

Block S22 is explained by taking SSB beams or CLI-RS beams as examples respectively.

For the SSB beam and SSB correspond to the SSB beam, the victim base station can measure, within the interference measurement window, a RSRP of each SSB of the aggressor base station based on Secondary Synchronization Signals (SSS) of each SSB of the aggressor base station, which is recorded as CLI-SSB-RSRP. For each SSB, the victim base station stores a base station ID, SSB index and CLI-SSB-RSRP corresponding to the SSB. For the SSB index, please refer to the resource ID of the SSB above.

For the CLI-RS corresponding to the CLI-RS beam, the victim base station measures, within the interference measurement window, the RSRP of each CLI-RS of the aggressor base station, which is recorded as CLI-RSRP. For each CLI-RS, the victim base station stores a base station ID, CLI-RS index and CLI-RSRP corresponding to the CLI-RS. The CLI-RS index can be determined by the ID of the resource configuration information of CLI-RS, the ID of the CSI-RS resource set and the resource ID of CSI-RS. In examples of the present disclosure, a plurality of pieces of resource configuration information of CLI-RS can be configured for one base station, each piece of resource configuration information of CLI-RS corresponds to a plurality of CSI-RS resource sets, and each of the CSI-RS resource sets corresponds to a plurality of CSI-RSs.

In the victim base station, the beam measurement results of all SSB beams and CLI-RS beams, such as CLI-SSB-RSRP and CLI-RSRP above, can be divided into Short-Term (ST) CLI values and Long-Term (LT) CLI values. The Short-term CLI values are CLI-SSB-RSRP and CLI-RSRP obtained from each CLI measurement described above. That is to say, the victim base station can measure a current RSRP of each measurement signal as a CLI value of a beam corresponding to the measurement signal, i.e., a short-term CLI value of a beam corresponding to the measurement signal.

The long-term CLI values are CLI values obtained through filtering or arithmetic averaging by the victim base station according to the short-term CLI values in a long time. That is to say, the victim base station can measure the current RSRP of each measurement signal, and update a long-term CLI value of a beam corresponding to each measurement signal according to the current RSRP and a historical RSRP of the measurement signal. The historical RSRP can be the long-term CLI value obtained from the last measurement. The victim base station can calculate the long-term CLI value by the following Equation (1).

$$RSRP_{Avg}(t) = (1-\gamma)^* RSRP_{Avg}(t-1) + \gamma^* \cdot RSRP_{Ins}(t) \qquad (1)$$

In the Equation (1), $RSRP_{Avg}(t)$ represents the long-term CLI value at a current time t, $RSRP_{Ins}(t)$ represents the current RSRP, that is, the RSRP at the current time t, and $RSRP_{Avg}(t-1)$ represents the historical RSRP, that is, the long-term CLI value obtained at a last time t-1, y represents a coefficient of a filter and its value range is [0,...,1]. A value of y can be selected according to actual situations. An initial value of $RSRP_{Avg}$ can be set according to actual services and environment. For example, the initial value of $RSRP_{Avg}$ can default to 0.

In examples of the present disclosure, the historical RSRP can also be the short-term CLI value at each time obtained before the current time, which is not limited. At this time, the victim base station can calculate the long-term CLI value by the following Equation (2).

$$RSRP_{Avg}(t) = (RSRP_{Ins}(t) + RSRP_{Ins}(t-1) + ... + \cdot RSRP_{Ins}(t-N+1)) / N \quad (2)$$

In the Equation (2), $RSRP_{Avg}(t)$ represents the long-term CLI value at the current time t, $RSRP_{Ins}(t)$ represents the current RSRP, that is, the RSRP at the current time t, and $RSRP_{Ins}(t-i)$ represents the historical RSRP, that is, the RSRP at a time t-i, which can also be called the short-term CLI value at the time t-i, where i = 1, ..., N-1, and N represents total number of obtained short-term CLI values.

The calculation of the long-term CLI value can also be completed in the controller, the controller can calculate the long-term CLI value by the Equation (1) or Equation (2) according to the historical RSRP and the short-term CLI value reported by the victim base station.

In examples of the present disclosure, which CLI value to be obtained and which CLI value to be reported to the controller can be sent to the victim base station by the controller in reporting configuration information of the beam measurement results.

In some examples of the present disclosure, it is also provided a method for measuring CLI as shown in Fig. 6, which is applied to the victim base station, the method includes:

Block S61: receiving within an interference measurement window, different measurement signals transmitted by an aggressor base station using different beams, wherein the measurement signals correspond to the beams one by one, and the different beams have different directions; which is the same as the block S21.

Block S62: measuring, for each measurement signal, a CLI value of a beam corresponding to the measurement signal, which is the same as the block S22.

Block S63: generating a beam measurement result based on a CLI value of each beam.

Block S64: sending the beam measurement result to the controller.

In technical solutions provided by examples of the present disclosure, after measuring the CLI value of each beam, the victim base station can generate a corresponding beam measurement result according to reporting configuration information configured by a controller, and send the beam measurement result to the controller. Then the controller can complete the coordinated scheduling between the aggressor base stations and the victim base station based on the beam measurement result. That is, the controller coordinates time-frequency domain resource scheduling between the aggressor base stations and the victim base station. For example, transmission of downlink channel or signal of the aggressor base stations is suspended, or transmission power of the downlink channel or signal is reduced, or the victim base station is informed to suspend UL scheduling, etc., thus solving a problem that the aggressor base stations and the victim base station are independent from each other and the coordinated scheduling cannot be completed.

In the block S63, after performing CLI measurement and measuring a short-term CLI value or long-term CLI value of each beam, the victim base station generates the beam measurement result according to a reporting type in the reporting configuration information.

The reporting type in the reporting configuration information can be as follows:

Mode 1: all reporting, that is, the victim base station reports beam measurement results of all beams to the controller. At this time, the beam measurement results can include an identity of the aggressor base station, an identity of each measurement signal and a CLI value of a beam corresponding to each measurement signal. For example, the beam measurement results are: {base station 1, measurement signal 1, CLI value 1 of a beam corresponding to the measurement signal 1}, {base station 1, measurement signal 2, CLI value 2 of a beam corresponding to the measurement signal 2}, {base station 2, measurement signal 1, CLI value 1 of a beam corresponding to the measurement signal 1} and {base station 2, measurement signal 2, CLI value 2 of a beam corresponding to the measurement signal 2}.

At this time, the controller makes a decision according to the CLI value of each beam in each aggressor base station, and determines a beam that need to be forbidden and a beam that need to be recommended in each aggressor base station.

In examples of the present disclosure, there can be a plurality of victim base stations, and the beam measurement result of each victim base station can also include the ID of the victim base station so as to facilitate determination of the beam measurement result of the victim base station and accurate coordinated scheduling.

Mode 2: partial reporting. In response to determining that RSRP of a certain measurement signal is greater than a first preset CLI threshold, a beam corresponding to the measurement signal is a forbidden beam, which interferes with the victim base station. In order to facilitate distinction and understanding, in examples of the present disclosure, a forbidden beam corresponding to a measurement signal with RSRP greater than the first preset CLI threshold is simply called a first forbidden beam. The victim base station generates a beam measurement result of the first forbidden beam. In response to determining that RSRP of a certain measurement signal is smaller than a second preset CLI threshold, a beam corresponding to the measurement signal is a preferred beam. In order to facilitate distinction and understanding, in examples of the present disclosure, a preferred beam corresponding to the measurement signal with RSRP smaller than the second preset CLI threshold is simply referred to as a first preferred beam. The victim base station generates a beam measurement result of the first preferred beam. That is to say, in response to determining that there is the first forbidden beam or the first preferred beam among all beams used by the aggressor base stations, the beam measurement result of the first forbidden beam or the first preferred beam is generated, and then the beam measurement result of the first forbidden beam or the first preferred beam is reported. The RSRP of the above measurement signal is the CLI value of a beam corresponding to the measurement signal.

In response to determining that the partial reporting mode is adopted, the beam measurement result can include an identity of the aggressor base station, a first forbidden beam list and a first preferred beam list, wherein the first forbidden beam list includes an identity of a measurement signal corresponding to each first forbidden beam and a CLI value of each first forbidden beam, and the first preferred beam list includes an identity of a measurement signal corresponding to each first preferred beam and a CLI value of each first preferred beam. The first forbidden beam is a beam with a CLI value is greater than the first preset CLI threshold. The first forbidden beam causes serious interference to the reception of the victim base station, and the victim base station advises the aggressor base stations to avoid using the first forbidden beam. The first preferred beam is a beam with a CLI value smaller than the second preset CLI threshold, and is a beam recommended by the victim base station to be used by the aggressor base stations. The first preset CLI threshold and the second preset CLI threshold can be set according to actual requirements. Here, there is a corresponding relationship between the identity of the aggressor base station, the first forbidden beam list and the first preferred beam list, for example the identity of one aggressor base station corresponds to one first forbidden beam list and one first preferred beam list, so as to quickly and accurately determine beams that each aggressor base station needs to forbid and recommend. For example, beam measurement results can include {identity 1 of an aggressor base station, first forbidden beam list 1 and first preferred beam list 1}, {identity 2 of an aggressor base station, first forbidden beam list 2 and first preferred beam list 2} and so on.

In response to determining that the partial reporting mode is adopted, the beam measurement result can also include an identity of an aggressor base station, the first forbidden beam list and the first preferred beam list, wherein the first forbidden beam list includes an identity of a measurement signal corresponding to each first forbidden beam, and the first preferred beam list includes an identity of a measurement signal corresponding to each first preferred beam. Here, the victim base station reduces information reported to the controller and saves bandwidth resources. Here, there is a corresponding relationship between the identity of an aggressor base station, the first forbidden beam list and the first preferred beam list. For example, beam measurement results can include {identity 1 of an aggressor base station, first forbidden beam list 1 and first preferred beam list 1}, { identity 2 of an aggressor base station, first forbidden beam list 2 and first preferred beam list 2} and so on.

The identity of a measurement signal can be determined according to a type of the measurement signal. For example, in response to determining that the measurement signal is SSB, the identity of the measurement signal can refer to the above SSB index. Combining with the identity of an aggressor base station and the SSB index, one SSB can be uniquely determined, and then a coarse beam corresponding to the SSB can be uniquely determined. In response to determining that the measurement signal is CLI-RS, and the identity of the measurement signal can refer to the above CLI-RS index. Combining with the identity of an aggressor base station and the CLI-RS index, one CLI-RS can be uniquely determined, and then a fine beam corresponding to the CLI-RS can be uniquely determined.

For the mode 1, reporting all beam measurement results will occupy a lot of bandwidth resources. Compared the mode 1, mode 2 can save bandwidth resources. In practice, whether beam measurement results reported by the victim base station include ST CLI values or LT CLI values and whether all reporting or partial reporting is adopted can be configured by the controller.

The controller can configure same reporting type or different reporting types for all base stations controlled by the controller. In response to determining that the LT CLI value is to be calculated by the controller, the controller needs to configure the reporting type of the victim base station so that the beam measurement results include the ST CLI values and all of the beam measurement results are reported, and other conditions are not limited. In practice, in order to reduce the complexity of the controller, all base stations controlled by the controller use the same reporting type. For example, reporting types used by all base stations controlled by the controller are that the beam measurement results including ST CLI values and all of the beam measurement results are reported.

In examples of the present disclosure, in response to determining that the reporting type of the victim base station is all reporting, the beam measurement result may include a SSB beam list and a CLI-RS beam list, wherein the SSB beam list can include an identity of a measurement signal corresponding to each SSB beam and a CLI value of each SSB beam, and the CLI-RS beam list can include an identity of a measurement signal corresponding to each CLI-RS beam and a CLI value of each CLI-RS beam. The SSB beam list and the CLI-RS beam list include IDs of measurement signals corresponding to all beams of the aggressor base station and CLI values of the beams.

In response to determining that the reporting type of the victim base station is partial reporting, in the beam measurement results, the first forbidden beam list can be divided into a forbidden SSB beam list and a forbidden CLI-RS beam list, and the first preferred beam list can be divided into a preferred SSB beam list and a preferred CLI-RS beam list. The forbidden SSB beam list includes an identity of a measurement signal corresponding to a SSB beam to be forbidden and a CLI value of the SSB beam, etc. The forbidden CLI-RS beam list includes an identity of a measurement signal corresponding to a CLI-RS beam to be forbidden and a CLI value of the CLI-RS beam, etc. The preferred SSB beam list includes an identity of a measurement signal corresponding to a SSB beam to be recommended and a CLI value of the SSB beam, etc. The preferred CLI-RS beam list includes an identity of a measurement signal corresponding to a CLI-RS beam to be recommended and a CLI value of the CLI-RS beam, etc.

In examples of the present disclosure, in response to determining that the reporting type of the victim base station does not match a list included in a configured beam measurement result, the victim base station may not report the beam measurement result to the controller. For example, in response to determining that the configured beam measurement result includes the SSB beam list and the CLI-RS beam list and the reporting type is partial reporting, the victim base station will not report the beam measurement result to the controller.

After obtaining the beam measurement result, the victim base station performs block S64 of reporting the beam measurement result to the controller for subsequent coordinated scheduling.

The reporting of beam measurement result can be periodic reporting or event-triggered reporting.

For periodic reporting, the beam measurement result is reported to the controller by the victim base station according to a certain configured reporting period (i.e. a preset reporting period), that is, a latest beam measurement result is sent to the controller according to the preset reporting period. Here, the unit of the preset reporting period is the same as that of the interference measurement window. The preset reporting period can be greater than or equal to that of an actually used interference measurement window, and a maximum value of the preset reporting period does not exceed a maximum configurable period of the interference measurement window, that is, the preset reporting period is smaller than or equal to the maximum configurable period of the interference measurement window. In response to determining that the preset reporting period is greater than the period of the interference measurement window, the victim base station reports the latest beam measurement result.

For event-triggered reporting, in response to determining that a preset trigger condition is met, the victim base station reports the beam measurement result to the controller. The preset trigger condition is that the first forbidden beam and/or the first preferred beam in beams corresponding to at least one measurement signal changes. That is, the preset trigger condition is that the identity of a measurement signal included in the first forbidden beam list at the current time is not completely the same as that included in the first forbidden beam list reported to the controller last time, or that the identity of a measurement signal included in the first preferred beam list at the current time is not completely the same as that included in the first preferred beam list reported to the controller last time.

For a periodic measurement signal, the reporting of a beam measurement result corresponding to the measurement signal can be periodical reporting or event-triggered reporting. For an aperiodic or semi-persistent measurement signal, the reporting of a beam measurement result corresponding to the measurement signal can be event-triggered reporting.

In examples of the present disclosure, there can be a plurality of victim base stations. The beam measurement result can also include the ID of each victim base station in order to facilitate determining of the CLI measurement result of each victim base station and accurate coordinated scheduling. The ID of the victim base station corresponds to the identity of the first resource configuration information one by one.

After receiving beam measurement results of CLI measurement sent by each victim base station, the controller can determine the beam measurement results of different beams in different victim base stations based on an identity of an aggressor base station, an identity of a measurement signal and an identity of a victim base station in the beam measurement results.

The controller performs coordinated scheduling based on beam measurement results of different beams in different victim base stations.

The process of coordinated scheduling is: after receiving beam measurement results reported by each victim base station, the controller determines a set of all beam measurement results in each aggressor base station that interfere with other base stations, and then sends beam information corresponding to each measurement signal in the set of beam measurement results to each aggressor base station. According to these beam information, the aggressor base station tries to avoid scheduling downlink transmission on beams with interference. According to the determined first forbidden beam and first preferred beam, the victim base station can schedule uplink transmission on beams with interference. The set of beam measurement results includes a second forbidden beam list and a second preferred beam list, wherein a second forbidden beam is a beam to be forbidden and a second preferred beam is a beam to be recommended. The beam information may include an index of a measurement signal corresponding to the beam and an identity of an aggressor base station.

The beam measurement results reported by the victim base station include beam measurement results of different beams of different aggressor base stations. For a certain aggressor base station, its beam measurement results come from different victim base stations. The controller can gather all beam measurement results reported by each victim base station, and distinguish the beam measurement results of different aggressor base stations, so as to conduct unified coordinated scheduling.

For all beam measurement results of a certain aggressor base station, the controller determines which beams in the aggressor base station will interfere with other base stations according to the corresponding relationship between these beams and measurement signals. Whether an aggressor beam is determined based on the ST CLI value or the LT CLI value can be determined by the controller. The aggressor beam is a beam that interferes with other base stations, and the aggressor beam can be the first forbidden beam or the second forbidden beam.

In response to determining that the LT CLI value is needed and the victim base station reports the ST CLI value, the controller can calculate the LT CLI value based on the ST CLI value according to the above Equation (1). In response to determining that the controller configures the victim base station to report the LT CLI value, the controller cannot use the ST CLI value to determine the aggressor beam of the aggressor base station, that is, the second forbidden beam. In addition, the aggressor beam in the aggressor base station can also be determined according to the reporting type of the victim base station as follows.

A. the reporting type of the victim base station is all reporting.

In response to determining that the reporting type of beam measurement results is all reporting, the controller can determine which beams will cause interference and which will not, that is, determine the second forbidden beam and the second preferred beam.

The controller and the victim base station determine the second forbidden beam and the second preferred beam in the same way. The first preset CLI threshold and the second preset CLI threshold in the controller and the victim base station can be configured as an agreed fixed value, or can be determined according to algorithms of the controller or the victim base station itself, which is not specifically limited.

B. the reporting type of the victim base station is partial reporting.

In response to determining that the reporting type of beam measurement results is partial reporting, the controller can determine the second forbidden beam and the second preferred beam of the aggressor base station by using the first forbidden beam and the first preferred beam reported by the victim base station.

The second forbidden beam and the second preferred beam can include SSB beams and CLI-RS beams, wherein SSB beams correspond to SSB resources one by one, and CLI-RS beams correspond to CSI-RS resources one by one. In fact, a certain beam in the aggressor base station is the first forbidden beam for one victim base station, but the first preferred beam for other victim base stations. Because a forbidden beam has high priority, thus the forbidden beam can be considered as the second forbidden beam.

For example, in response to determining that the victim base station adopts the partial reporting, and the beam measurement results include the first forbidden beam list and the first preferred beam list, a measurement signal whose identity included in any first forbidden beam list is called a first measurement signal, and a measurement signal whose identity not included in any first forbidden beam list but included in any first preferred beam list is called a second measurement signal. The controller can determine a beam corresponding to each first measurement signal as the second forbidden beam in the aggressor base station that transmits the first measurement signal and determine a beam corresponding to each second measurement signal as the second preferred beam in the aggressor base station that transmits the second measurement signal.

In response to determining that the victim base station adopts the all reporting and the beam measurement results do not include the first forbidden beam list and the first preferred beam list, a CLI value of one measurement signal is included in each of the beam measurement results. That is, for one measurement signal, a plurality of CLI values of measurement signals can be obtained from a plurality of beam measurement results. The controller can determine the second forbidden beam and the second preferred beam in the aggressor base station according to a CLI value included in a measurement result of each beam, which is specifically as follows:

in response to determining that any target CLI value of a measurement signal is greater than a first preset CLI threshold, the controller can determine that a beam corresponding to the measurement signal is the second forbidden beam in the aggressor base station that transmits the measurement signal; in response to determining that each target CLI value of a measurement signal is smaller than or equal to the first preset CLI threshold and any target CLI value of the measurement signal is smaller than a second preset CLI threshold, the controller can determine that a beam corresponding to the measurement signal is the second preferred beam in the aggressor base station that transmits the measurement signal.

In response to determining that the CLI value included in the beam measurement result is a current RSRP of the measurement signal, i.e., the CLI value included in the beam measurement result is a short-term CLI value, the target CLI value can be the current RSRP included in the beam measurement result, that is, the target CLI value can be the short-term CLI value, or the target CLI value can be a RSRP determined according to the current RSRP included in the beam measurement result and a historical RSRP, that is, the target CLI value can also be a long-term CLI value. In response to determining that the CLI value included in the beam measurement result is the RSRP determined according to the current RSRP and the historical RSRP, that is, the CLI value included in the beam measurement result is the long-term CLI value, the target CLI value can be the RSRP included in the beam measurement result, i.e., the target CLI value can be the CLI value included in the beam measurement result, that is, the target CLI value is the long-term CLI value.

After determining the second forbidden beam and the second preferred beam, the controller sends the beam information of the second forbidden beam and the second preferred beam to the aggressor base station. In response to determining that a certain aggressor base station has no second forbidden beam and no second preferred beam, the controller may not send beam information to this aggressor base station.

After receiving the beam information of the second forbidden beam and the second preferred beam, the aggressor base station forbids the second forbidden beam, such as forbids transmitting data to the user equipment by using a beam with the same direction as the second forbidden beam. In examples of the present disclosure, the second forbidden beam only forbids transmission of data except measurement signals, and does not forbid transmission of the measurement signals, to avoid causing the victim base station to fail to perform normal CLI measurement.

In examples of the present disclosure, all beams of a single aggressor base station may interfere with other base stations. Therefore, in response to determining that the aggressor base station is forbidden scheduling on these beams, there will be no data transmission in the aggressor base station, which will affect the performance of the aggressor base station. In order to avoid this situation, the controller can set an upper limit on the number of second forbidden beams, so as to avoid setting all beams of the aggressor base station as second forbidden beams. The number of second forbidden beams is set to a certain proportion of a total number of beams of the aggressor base station. For example, in the aggressor base station, a ratio of the second forbidden beams to all beams of the aggressor base station is smaller than a preset ratio, which can be set according to actual needs, such as {10%, 20%, 30%, 50%,..., 90%}. In addition, the number of times that the second forbidden beam is forbidden is greater than the number of times that other beams in the aggressor base station are forbidden, that is, the selection of second forbidden beams can be determined from high to low according to the number of times that beams are determined as second forbidden beams. This can reduce the CLI to a maximum extent.

On the other hand, in practice, some users may be semi-fixed users who have not moved for a long time. In response to determining that beams directed to these users are forbidden for a long time, normal data transmission of these users will be affected. At this time, the controller can configure a forbidden window. In the aggressor base station, the forbidden window is a window within which the second forbidden beam is forbidden. In the victim base station, the forbidden window is a window within which a beam with a same pointing area as that of the first forbidden beam is forbidden. Specifically, within the forbidden window, the aggressor base station is forbidden transmitting data through the second forbidden beam, and the victim base station is not forbidden receiving data through a beam with the pointing area as that of the first forbidden beam; and outside the forbidden window, the aggressor base station is not forbidden transmitting data through the second forbidden beam, and the victim base station is forbidden receiving data through a beam with the same pointing area as that of the first forbidden beam.

As shown in Fig. 3, both beam 1 and beam 2 point to an area where the device UE0 is located. In response to determining that beam 1 is determined by gNB1 as the first forbidden beam and is determined by the controller as the second forbidden beam, within the validated forbidden window, gNB0 is forbidden transmitting data through beam 1 and gNB1 is not forbidden receiving data through beam 2; and outside the validated forbidden window, gNB0 is not forbidden transmitting data through beam 1 and gNBI1 is forbidden receiving data through beam 2.

In some examples, the controller can send an activation message, such as a first activation message, to the victim base station. The first activation message can include an identity of a forbidden window to be activated, which is a window within which a beam with the same pointing area as that of the first forbidden beam is forbidden. After receiving the first activation message sent by the controller, in response to determining that a next frame structure period is reached, the victim base station will invalidate the validated forbidden window and will validate the forbidden window to be activated according to the first activation message. Within the validated forbidden window, the victim base station can receive data transmitted by the user equipment through beams in any direction. Outside the validated forbidden window, the victim base station can forbid receiving data transmitted by the user equipment through a beam with the same pointing area as that of the first forbidden beam, thus reducing the influence of CLI.

The controller can also send an activation message, such as a third activation message, to the aggressor base station. The third activation message can include an identity of a forbidden window to be activated which is a window within which the second forbidden beam is forbidden. After receiving the third activation message sent by the controller, in response to determining that a next frame structure period is reached, the aggressor base station will invalidate the validated forbidden window, and will validate the forbidden window to be activated according to the third activation message. Within the validated forbidden window, the aggressor base station can forbid transmitting data to the user equipment through the second forbidden beam, and can transmit data to the user equipment through the second preferred beam, thus reducing the influence of CLI. Outside the validated forbidden window, the aggressor base station can transmit data to the user equipment through beams in any direction, thus ensuring the performance of the aggressor base station to some extent.

Here, there are one or more forbidden windows. Each forbidden window has its unique ID, and only one forbidden window is activated at the same time, that is, only one forbidden window is validated at the same time. The validated forbidden window is used for forbidding beam. The controller can send first configuration messages of a plurality of forbidden windows to the aggressor base station and the victim base station. In order to ensure the communication quality, after receiving the first configuration message of the forbidden windows, the aggressor base station and the victim base station validate a default forbidden window among all the plurality of forbidden windows based on the received first configuration information of the forbidden windows. The first configuration information indicates slots occupied by the forbidden windows. The default forbidden window can be a first forbidden window configured. In response to determining that the forbidden windows need to be adjusted, the controller can send the first activation message to the victim base station and send the third activation message to the aggressor base station. In examples of the present disclosure, in order to save resources of the aggressor base station and the victim base station, the aggressor base station and the victim base station will validate a corresponding forbidden window after receiving the first activation message or the third activation message. At the same time, the aggressor base station and the victim base station will start to forbid beams used by them after the forbidden window is validated.

In this way, the controller only activates one forbidden window at a time, which avoids affecting data transmission due to forbidding data transmission for a long time. In addition, in examples of the present disclosure, once the controller configures the configuration information of the forbidden windows in the aggressor base station and the victim base station, the aggressor base station and the victim base station will activate the default forbidden window. In response to determining that the activated forbidden window needs to be changed, the controller will send an activation message to the aggressor base station and the victim base station to change the activated forbidden window. It can be seen that the aggressor base station and the victim base station will activate one forbidden window after the configuration information of the forbidden windows are configured, thus ensuring data transmission.

In examples of the present disclosure, the configuration information of the forbidden windows indicates slots occupied by the forbidden windows. For convenience of description and understanding, the configuration information of the forbidden windows will be referred to as the first configuration information. In examples of the present disclosure, in response to determining that the controller cannot determine appropriate configuration information for the forbidden windows, the controller can carry the necessary first configuration information of the forbidden window to be activated in the first activation message and the third activation message. Based on the first configuration information of the forbidden window to be activated, in response to determining that the next frame structure period is reached, the aggressor base station and the victim base station can validate the forbidden window to be activated in slots indicated by the first configuration information of the forbidden window to be activated. The first configuration information can include one or more configuration parameters selected from: a reference SCS of the forbidden window, the length of the forbidden window, a period of the forbidden window and an offset of the forbidden window within one frame structure period.

(1) The reference SCS of the forbidden window can be a SCS of the aggressor base station, which requires no additional configuration.

(2) The length of the forbidden window is smaller than or equal to the frame structure period.

The length of the forbidden window is directly related to the frame structure period. After the SCS is determined, the number of slots in one frame structure period can be determined. The forbidden window shall not exceed the frame structure period at most. As an example, taking a slot as a unit of the forbidden window, the length of the forbidden window can be {1, 2, 4, 5, 8, 10, 16, 20, 32, 40, 64, 80, 128, 160}.

For example, in response to determining that the frame structure period is 20 slots, a maximum length of the forbidden window is 20 slots; and in response to determining that the frame structure period is 160 slots, the maximum length of the forbidden window is 160 slots.

(3) The period of the forbidden window is an integer multiple of the frame structure period.

The period of the forbidden window is also directly related to the frame structure period. The period of the forbidden window can be configured as an integer multiple of the frame structure period. As an example, taking a slot as the unit of the forbidden window, the period of the forbidden window can be N*{1, 2, 4, 5, 8, 10, 16, 20, 32, 40, 64, 80, 128, 160}, where N is a positive integer, such as {1, 2, 4, 8}. Based on this, a maximum value of N is 8, and a maximum value of the frame structure period is 160 slots. Therefore, the period of the forbidden window does not exceed 8*160=1280, that is, values of the period of the forbidden window can be {1, 2, 4, 5, 8, 10, 16, 20, 32, 40, 64, 80, 128, 160, 256, 320, 512, 640, 1024, 1280}.

Considering that a maximum SCS value of the base station is 120 KHz, at this time, each slot accounts for 0.125 ms, and 0.125ms*1280=160 ms. Based on this, it can be known that the period of the forbidden window is not more than 160ms.

(4) The offset of the forbidden window within one frame structure period does not exceed a last slot within the frame structure period.

The offset of the forbidden window is a specific offset of the forbidden window within the frame structure period, and is within the frame structure period. As an example, taking a slot as the unit of the forbidden window, the offset of the forbidden window in one frame structure period can be {0, ..., 159}. At this time, a sum of the offset of the forbidden window and the length of the forbidden window may exceed the frame structure period. A part of the forbidden window that exceeds the frame structure period is invalid, that is, the part of the forbidden window that is longer than the frame structure period cannot be used to forbidden a beam.

In order to improve efficiency of forbidding beams, the sum of the offset of the forbidden window and the length of the forbidden window in one frame structure period does not exceed the last slot in the frame structure period, that is, the forbidden window does not exceed the last slot in the frame structure period. That is to say, the forbidden window is completely located in one frame structure period, and the whole forbidden window can be used to forbid receiving or transmitting data through the second forbidden beam.

The first configuration information of the forbidden window can also be converted to have the unit of *ms*. According to a time length of slots under the SCS of the aggressor base station, the first configuration information of the forbidden window can be converted to have the unit of *ms*.

In examples of the present disclosure, a maximum configurable number of forbidden windows can be 2, 4, 8, etc. In response to determining that the forbidden window is to be configured, the controller configures one forbidden window at least. In response to determining that a plurality of forbidden windows are configured, a first forbidden window can be activated by default, that is, the first forbidden window is an activated forbidden window by default. In response to determining that the activated forbidden window needs to be updated, the controller can send an identity of a forbidden window that needs to be activated to the aggressor base station through additional information, such as the third activation message, and send the identity of the forbidden window that needs to be activated to the victim base station through additional information, such as the first activation message.

Before the beam measurement results are returned by the victim base station, the controller can configure all forbidden windows for each aggressor base station. After receiving the beam measurement results returned by the victim base station, the controller can select a suitable forbidden window to be activated from all forbidden windows according to the beam measurement results. In response to determining that there is no suitable forbidden window, the controller can additionally configure a new forbidden window for the aggressor base station and activate this new forbidden window at the same time. The controller can also configure a forbidden window for the aggressor base station after receiving the beam measurement results returned by the victim base station, and activate this forbidden window at the same time.

For the beam configuration information such as the configuration information of the forbidden window, the second forbidden beam and the second preferred beam, the controller can send the beam configuration information of each aggressor base station to a corresponding aggressor base station. According to the second forbidden beam, the second preferred beam and the configuration information of the forbidden window in the beam configuration information, the aggressor base station avoids using the second forbidden beam to transmit data and prefers to use the second preferred beam to transmit data as much as possible within the validated forbidden window.

Within the validated window of a certain aggressor base station, the victim base station can schedule beams in any direction to receive data; while outside the validated forbidden window, the victim base station can avoid using a beam with the same pointing area as that of the first forbidden beam in the aggressor base station to receive data or do not schedule data.

The technical solutions provided by examples of the present disclosure relate to CLI measurement, reporting and coordinated scheduling based on beams in the 5G-Adv communication system, that is, beam measurement, reporting and coordinated scheduling are performed among base stations by using measurement signals corresponding to beams. After the configurations of the measurement signals and interference measurement windows by the controller, the victim base station receives the measurement signals within the interference measurement windows, measures the CLI values of beams corresponding to the measurement signals, and reports the CLI values to the controller, so that the victim base station can effectively perform CLI measurement. The controller gather all reported CLI values and determines the second forbidden beam, the second preferred beam and the forbidden window, so as to coordinate the scheduling between the aggressor base station and the victim base station. With the above technology, coordinated scheduling among base stations is used to avoid or suppress CLI and improve the overall performance of the F-TDD communication system.

Corresponding to the method for measuring CLI which is applied to the victim base station, an example of the present disclosure also provides a method for measuring CLI which is applied to an aggressor base station, wherein at least one measurement signal is configured in the aggressor base station, and time-frequency domain resources occupied by some or all of the at least one measurement signal are within an interference measurement window, and the at least one measurement signal corresponds to beams one by one, and different beams have different directions; as shown in Fig. 7, the method includes:

> Block S71: obtaining second resource configuration information of the aggressor base station, wherein the second resource configuration information indicates time-frequency domain resources occupied by the at least one measurement signal;
> Block S72: transmitting the at least one measurement signal to a victim base station by using different beams according to the second resource configuration information.

In technical solutions provided by examples of the present disclosure, the aggressor base station transmits measurement signals to the victim base station by using different beams, and then the victim base station measures different measurement signals in the interference measurement window, so as to obtain CLI values of different measurement signals, that is, CLI values of beams corresponding to different measurement signals. Based on the CLI values of different beams, corresponding technologies for suppressing CLI can be obtained to assist time-frequency resource scheduling among base stations, suppress CLI in different beam directions in the F-TDD communication system, and improve the performance of the F-TDD communication system. In addition, the victim base station measures measurement signals corresponding to different beams only within the interference measurement window, which reduces the complexity of interference measurement by the victim base station and saves the energy of the victim base station.

In some examples, the Block S71 of obtaining second resource configuration information of the aggressor base station can include: receiving the second resource configuration information of the aggressor base station sent by a controller.

In examples of the present disclosure, in response to determining that the second resource configuration information is configured during CLI measurement, the aggressor base station can obtain the second resource configuration information stored locally by the aggressor base station; in response to determining that the second resource configuration information is not configured in the aggressor base station, the aggressor base station can obtain the second resource configuration information from the controller, thus ensuring CLI measurement.

In some examples, all measurement signals transmitted by the aggressor base station include a SSB corresponding to a coarse beam and/or a CSI-RS corresponding to a fine beam; and a plurality of fine beams are included in a range of the coarse beam.

In some examples, the second resource configuration information of the aggressor base station includes an indication parameter corresponding to the CSI-RS, and the indication parameter indicates that the CSI-RS is used for measuring cross link interference CLI.

In some examples, the method for measuring CLI can further include:

receiving a beam measurement result set, sent by a controller, obtained by measuring cross link interference CLI via each victim base station, wherein the beam measurement result set comprises a second forbidden beam list and a second preferred beam list, wherein the second forbidden beam list comprises an identity of a measurement signal corresponding to each second forbidden beam in the aggressor base station, and the second preferred beam list comprises an identity of a measurement signal corresponding to each second preferred beam in the aggressor base station; and the second forbidden beam is a beam to be forbidden, and the second preferred beam is a beam to be recommended; and/or

receiving a third activation message sent by the controller, wherein the third activation message includes an identity of a forbidden window to be activated, and the forbidden window to be activated is a window within which the second forbidden beam is forbidden; in response to determining that a next frame structure period is reached, invalidating a validated forbidden window and validating the forbidden window to be activated according to the third activation message; within the validated forbidden window, forbidding transmitting data to user equipment by using the second forbidden beam, and transmitting data to the user equipment by using the second preferred beam; outside the validated forbidden window, transmitting data to the user equipment by using beams in any direction.

In some examples, there are one or more forbidden windows, and the method for measuring CLI can further include:

after receiving first configuration information of the forbidden windows sent by the controller, validating a default forbidden window in all the forbidden windows based on the received first configuration information of the forbidden windows, wherein the first configuration information of each forbidden window indicates slots occupied by the forbidden window.

In some examples, the third activation message can further include first configuration information of the forbidden window to be activated, which indicates slots occupied by the forbidden window to be activated. In this case, validating the forbidden window to be activated according to the third activation message may include: validating the forbidden window to be activated in slots indicated by the first configuration information of the forbidden window to be activated.

In some examples, a ratio of the second forbidden beam to all beams in the aggressor base station is smaller than a preset ratio.

In some examples, the first configuration information of each forbidden window can include one or more configuration parameters selected from: a reference SCS of the forbidden window, a length of the forbidden window, a period of the forbidden window and an offset of the forbidden window within one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

In some examples, the forbidden window does not exceed the last slot in the frame structure period.

In some examples, in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;

in response to determining that the victim base station is a full-duplex base station and the aggressor base station is a half-duplex base station, the interference measurement window occupies any one or more continuous designated slots which are downlink slots of the aggressor base station; and

in response to determining that the victim base station is a half-duplex base station and the aggressor base station is a full-duplex base station, the interference measurement window occupies any one or more continuous designated slots which are uplink slots of the victim base station.

In some examples, there are one or more interference measurement windows, and a validated interference measurement window is used for measuring CLI; the second configuration information of the interference measurement windows indicates slots occupied by the interference measurement windows, and the second configuration information of each interference measurement window can include one or more configuration parameters selected from: a reference SCS of the interference measurement window, a length of the interference measurement window, a period of the interference measurement window and an offset of the interference measurement window in one frame structure period;

the reference SCS of the interference measurement window is a fixed SCS or a SCS of the victim base station;
the length of the interference measurement window is smaller than or equal to the frame structure period;
the period of the interference measurement window is an integer multiple of the frame structure period;
the offset of the interference measurement window in one frame structure period does not exceed a last slot in the frame structure period.

In some examples, the interference measurement window does not exceed the last slot in the frame structure period.

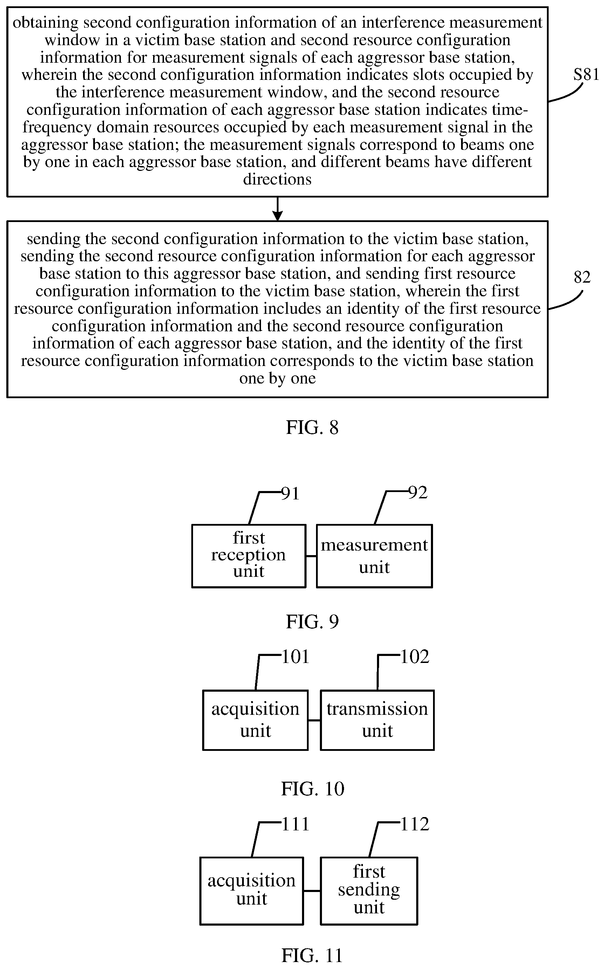

Corresponding to the method for measuring CLI which is applied to the victim base station, an example of the present disclosure also provides a method for measuring CLI which is applied to a controller as shown in Fig. 8, the method including:

Block S81: obtaining second configuration information of an interference measurement window in a victim base station and second resource configuration information for measurement signals of each aggressor base station, wherein the second configuration information indicates slots occupied by the interference measurement window, and the second resource configuration information of each aggressor base station indicates time-frequency domain resources occupied by each measurement signal in the aggressor base station; the measurement signals correspond to beams one by one in each aggressor base station, and different beams have different directions;
Block S82: sending the second configuration information to the victim base station, sending the second resource configuration information for each aggressor base station to this aggressor base station, and sending first resource configuration information to the victim base station, wherein the first resource configuration information includes an identity of the first resource configuration information and the second resource configuration information of each aggressor base station, and the identity of the first resource configuration information corresponds to the victim base station one by one.

In technical solutions provided by examples of the present disclosure, the aggressor base station transmit measurement signals to the victim base station by using different beams, and then the victim base station measures different measurement signals in the interference measurement window, so as to obtain CLI values of different measurement signals, i.e., CLI values of beams corresponding to different measurement signals. Based on the CLI values of different beams, corresponding technologies for suppressing CLI can be obtained to assist time-frequency resource scheduling among base stations, suppress CLI in different beam directions in the F-TDD communication system, and improve the performance of the F-TDD communication system. In addition, the victim base station measures measurement signals corresponding to different beams only within the interference measurement window, which reduces the complexity of interference measurement by the victim base station and saves the energy of the victim base station.

In some examples, the second configuration information can include one or more configuration parameters selected from: a reference SCS of an interference measurement window, a length of an interference measurement window, a period of an interference measurement window and an offset of an interference measurement window in one frame structure period;

the reference SCS of the interference measurement window is a fixed SCS or a SCS of the victim base station;
the length of the interference measurement window is smaller than or equal to the frame structure period;
the period of the interference measurement window is an integer multiple of the frame structure period;
the offset of the interference measurement window in one frame structure period does not exceed a last slot in the frame structure period.

In some examples, the interference measurement window does not exceed the last slot in the frame structure period.

In some examples, in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;

in response to determining that the victim base station is a full-duplex base station and the aggressor base station is a half-duplex base station, the interference measurement window occupies any one or more continuous designated slots which are downlink slots of the aggressor base station; and

in response to determining that the victim base station is a half-duplex base station and the aggressor base station is a full-duplex base station, the interference measurement window occupies any one or more continuous designated slots which are uplink slots of the victim base station.

In some examples, there are one or more interference measurement windows, and a validated interference measurement window is used for measuring CLI; in this case, the method for measuring CLI can further include: sending a second activation message to the victim base station, wherein the second activation message includes an identity of an interference measurement window to be activated.

In some examples, all measurement signals transmitted by each aggressor base station include a synchronization signal block SSB corresponding to a coarse beam and/or a channel state information-reference signal CSI-RS corresponding to a fine beam; and a plurality of fine beams are included in a range of the coarse beam.

In some examples, the second resource configuration information of each aggressor base station includes an indication parameter corresponding to the CSI-RS, and the indication parameter indicates that the CSI-RS is used for measuring CLI.

In some examples, there are one or more victim base stations, and method for measuring CLI can further include:

receiving a beam measurement result obtained through measuring CLI sent by each victim base station; and determining a second forbidden beam and a second preferred beam in each aggressor base station according to each beam measurement result, wherein the second forbidden beam is a beam to be forbidden and the second preferred beam is a beam to be recommended

In some examples, the beam measurement result can include an identity of the aggressor base station, an identity of each measurement signal and a CLI value of a beam corresponding to each measurement signal; or

the beam measurement result includes an identity of the aggressor base station, a first forbidden beam list and a first preferred beam list, wherein the first forbidden beam list includes an identity of a measurement signal corresponding to each first forbidden beam, and the first preferred beam list includes an identity of a measurement signal corresponding to each first preferred beam, wherein the first forbidden beam is a beam with a CLI value greater than a first preset CLI threshold, and the first preferred beam is a beam with a CLI value smaller than a second preset CLI threshold; or

the beam measurement result includes an identity of the aggressor base station, a first forbidden beam list and a first preferred beam list, wherein the first forbidden beam list includes an identity of a measurement signal corresponding to each first forbidden beam and a CLI value of each first forbidden beam, and the first preferred beam list includes an identity of a measurement signal corresponding to each first preferred beam and a CLI value of each first preferred beam.

In some examples, in response to determining that the beam measurement result includes the first forbidden beam list and the first preferred beam list, wherein determining a second forbidden beam and a second preferred beam in each aggressor base station according to each beam measurement result can include:

determining a beam corresponding to each first measurement signal as the second forbidden beam in an aggressor base station that transmits the first measurement signal, wherein the first measurement signal is a measurement signal whose identity is included in any first forbidden beam list; and

determining a beam corresponding to each second measurement signal as the second preferred beam in an aggressor base station that transmits the second measurement signal, wherein the second measurement signal is a measurement signal whose identity is not comprised in any first forbidden beam list, but is comprised in any first preferred beam list.

In some examples, in response to determining that the beam measurement result does not include the first forbidden beam list and the first preferred beam list, wherein determining a second forbidden beam and a second preferred beam in each aggressor base station according to each beam measurement result can include:

determining the second forbidden beam and the second preferred beam in each aggressor base station according to a CLI value included in each beam measurement result.

In some examples, wherein determining the second forbidden beam and the second preferred beam in each aggressor base station according to a CLI value included in each beam measurement result can include:

in response to determining that any target CLI value of a measurement signal is greater than a first preset CLI threshold, determining that a beam corresponding to the measurement signal is the second forbidden beam in the aggressor base station that transmits the measurement signal; and
in response to determining that each target CLI value of a measurement signal is smaller than or equal to the first preset CLI threshold and any target CLI value of the measurement signal is smaller than a second preset CLI threshold, determining that a beam corresponding to the measurement signal is the second preferred beam in the aggressor base station that transmits the measurement signal;
wherein, in response to determining that the CLI value included in the beam measurement result is a current RSRP of the measurement signal, the target CLI value is the current RSRP included in the beam measurement result, that is, the target CLI value can be a short-term CLI value, or the target CLI value can be a RSRP determined according to the current RSRP included in the beam measurement result and a historical RSRP, that is, the target CLI value can also be a long-term CLI value;
in response to determining that the CLI value included in the beam measurement result is the RSRP determined according to the current RSRP and the historical RSRP, the target CLI value is the RSRP included in the beam measurement result, that is, the target CLI value is the CLI value included in the beam measurement result, that is, the target CLI value is the long-term CLI value.

In some examples, in each aggressor base station, a ratio of the second forbidden beam to all beams in the aggressor base station is smaller than a preset ratio;
in each aggressor base station, the number of times that the second forbidden beam is forbidden is greater than the number of times that other beams in the aggressor base station are forbidden.

In some examples, the method for measuring CLI can further include:

sending a first activation message to a target victim base station and sending a third activation message to a target aggressor base station, wherein the first activation message and the third activation message include an identity of a forbidden window to be activated; the forbidden window to be activated in the target victim base station is a window within which a beam with a same pointing area as that of a first forbidden beam is forbidden, and the forbidden window to be activated in the target aggressor base station is a window within which the second forbidden beam is forbidden, wherein the first forbidden beam is a beam with a CLI value measured by the target victim base, greater than a first preset CLI threshold; the target victim base station is a victim base station with the first forbidden beam therein and the target aggressor base station is an aggressor base station with a second forbidden beam therein; and/or
sending a beam measurement result set obtained by measuring the CLI via each victim base station to the target aggressor base station, wherein the beam measurement result set includes a second forbidden beam list and a second preferred beam list, wherein the second forbidden beam list includes an identity of a measurement signal corresponding to each second forbidden beam in the target aggressor base station, and the second preferred beam list includes an identity of a measurement signal corresponding to each second preferred beam in the target aggressor base station.

In some examples, the first activation message and the third activation message further include first configuration information of the forbidden window to be activated, which indicates slots occupied by the forbidden window to be activated.

In some examples, the first configuration information of each forbidden window can include one or more configuration parameters selected from: a reference SCS of the forbidden window, a length of the forbidden window, a period of the forbidden window and an offset of the forbidden window within one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

In some examples, the forbidden window does not exceed the last slot in the frame structure period.

Corresponding to the method for measuring CLI, an example of the present disclosure also provides an apparatus for measuring CLI which is applied to a victim base station as shown in Fig. 9, the apparatus includes:

a first reception unit 91, to receive within an interference measurement window, different measurement signals transmitted by an aggressor base station using different beams, wherein the measurement signals correspond to the beams one by one, and the different beams have different directions;
a measurement unit 92, to measure, for each of the measurement signals, a cross link interference CLI value of a beam corresponding to the measurement signal.

In technical solutions provided by examples of the present disclosure, the aggressor base station transmits measurement signals to the victim base station by using different beams, and then the victim base station measures different measurement signals within the interference measurement window, so as to obtain CLI values of different measurement signals, i.e., CLI values of beams corresponding to different measurement signals. Based on the CLI values of different beams, corresponding technologies for suppressing the CLI values can be obtained so as to assist time-frequency resource scheduling among base stations, suppress CLI in different beam directions in the F-TDD communication system and improve the performance of the F-TDD communication system. In addition, the victim base station measures the measurement signals corresponding to different beams only within the interference measurement window, which reduces the complexity of interference measurement by the victim base station and saves energy of the victim base station.

In some examples, the measurement unit 92 can be specifically to:

measure a current RSRP of each measurement signal as the CLI value of the beam corresponding to the measurement signal; or
measure a current RSRP of each measurement signal; and update the CLI value of the beam corresponding to each measurement signal according to the current RSRP and a historical RSRP of the measurement signal.

In some examples, the apparatus for measuring CLI can further include:

a generation unit, to generate a beam measurement result based on a CLI value of a beam corresponding to each measurement signal; and
a sending unit, to send the beam measurement result to a controller.

In some examples, the generation unit can be specifically to:
generate, in response to determining that there is a first forbidden beam or a first preferred beam in all beams used by the aggressor base station, a beam measurement result for the first forbidden beam or the first preferred beam, wherein the first forbidden beam is a beam with a CLI value greater than a first preset CLI threshold, and the first preferred beam is a beam with a CLI value smaller than a second preset CLI threshold.
In some examples, the sending unit is specifically to:

send a latest beam measurement result to the controller according to a preset reporting period; or
send the beam measurement result to the controller in response to determining that a preset trigger condition is met.

In some examples, the preset reporting period is greater than or equal to a period of interference measurement windows, and is smaller than or equal to a maximum configurable period of the interference measurement windows.
In some examples, the preset trigger condition is that a first forbidden beam and/or a first preferred beam in all of the beams used by the aggressor base station changes, wherein the first forbidden beam is a beam with a CLI value greater than a first preset CLI threshold, and the first preferred beam is a beam with a CLI value smaller than a second preset CLI threshold.
In some examples, the beam measurement result includes an identity of the aggressor base station, an identity of each measurement signal and a CLI value of a beam corresponding to each measurement signal, wherein the first forbidden beam is a beam with a CLI value greater than a first preset CLI threshold, and the first preferred beam is a beam with a CLI value smaller than a second preset CLI threshold; or

the beam measurement result includes an identity of the aggressor base stations, a first forbidden beam list and a first preferred beam list, wherein the first forbidden beam list includes an identity of a measurement signal corresponding to each first forbidden beam, and the first preferred beam list includes an identity of a measurement signal corresponding to each first preferred beam; wherein the first forbidden beam is a beam with a CLI value greater than a first preset CLI threshold, and the first preferred beam is a beam with a CLI value smaller than a second preset CLI threshold; or
the beam measurement result includes an identity of the aggressor base station, a first forbidden beam list and a first preferred beam list, wherein the first forbidden beam list includes an identity of a measurement signal corresponding to each first forbidden beam and a CLI value of each first forbidden beam, and the first preferred beam list includes an identity of a measurement signal corresponding to each first preferred beam and a CLI value of each first preferred beam.

In some examples, the apparatus for measuring CLI can further include:
a second reception unit, to receive a first activation message sent by the controller, wherein the first activation message comprises an identity of a forbidden window to be activated, the forbidden window to be activated is a window within which a beam with a same pointing area as that of a first forbidden beam is forbidden, wherein the first forbidden beam is a beam with a CLI value greater than a first preset CLI threshold; in response to determining that a next frame structure period is reached, invalidating a validated forbidden window and validating the forbidden window to be activated according to the first activation message; receiving, within a validated forbidden window, data transmitted by user equipment by using beams in any direction; forbidding, outside the validated forbidden window, receiving data transmitted by the user equipment by using the beam with the same pointing area as that of the first forbidden beam.

In some examples, the first activation message can further include first configuration of the forbidden window to be activated, which indicates slots occupied by the forbidden window to be activated;
the second reception unit can be specifically to validate the forbidden window to be activated in the slots indicated by the first configuration information of the forbidden window to be activated.

In some examples, there are one or more forbidden windows, and the apparatus for measuring CLI can further include:
a first activation unit, to validate, after receiving first configuration information of the forbidden windows sent by the controller, a default forbidden window in all the forbidden windows based on the received first configuration information of the forbidden windows, wherein the first configuration information of each forbidden window indicates slots occupied by the forbidden window.

In some examples, the first configuration information of each forbidden window can include one or more configuration parameters selected from: a reference SCS of the forbidden window, a length of the forbidden window, a period of the forbidden window and an offset of the forbidden window in one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

In some examples, the forbidden window does not exceed the last slot in the frame structure period.
In some examples, in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;
in response to determining that the victim base station is a full-duplex base station and the aggressor base station is a half-duplex base station, the interference measurement window occupies any one or more continuous designated slots which are downlink slots of the aggressor base station; and
in response to determining that the victim base station is a half-duplex base station and the aggressor base station is a full-duplex base station, the interference measurement window occupies any one or more continuous designated slots which are uplink slots of the victim base station.

In some examples, there are one or more interference measurement windows, and a validated interference measurement window is used for measuring CLI; the apparatus for measuring CLI can further include:
a second activation unit, to validate, after receiving second configuration information of the interference measurement windows sent by a controller, a default interference measurement window in all the interference measurement windows based on the received second configuration information of the interference measurement windows, wherein the second configuration information of each interference measurement window indicates slots occupied by the interference measurement window.

In some examples, there are one or more interference measurement windows, and second configuration information of each interference measurement window includes one or more configuration parameters selected from: a reference SCS of the interference measurement window, a length of the interference measurement window, a period of the interference measurement window and an offset of the interference measurement window in one frame structure period;

the reference SCS of the interference measurement window is a fixed SCS or a SCS of the victim base station;

the length of the interference measurement window is smaller than or equal to the frame structure period;
the period of the interference measurement window is an integer multiple of the frame structure period;
the offset of the interference measurement window in one frame structure period does not exceed a last slot in the frame structure period.

In some examples, the interference measurement window does not exceed the last slot in the frame structure period.

In some examples, the apparatus for measuring CLI can further include:
a third reception unit, to receive first resource configuration information sent by a controller, wherein the first resource configuration information includes an identity of the first resource configuration information and second resource configuration information of each aggressor base station, and the identity of the first resource configuration information corresponds to the victim base station one by one, and the second resource configuration information of each aggressor base station indicates time-frequency domain resources occupied by each measurement signal in the aggressor base station.

In some examples, all measurement signals transmitted by each aggressor base station include a SSB corresponding to a coarse beam and/or a CSI-RS corresponding to a fine beam, and a plurality of fine beams are included in a range of the coarse beam.

In some examples, the second resource configuration information of each aggressor base station includes an indication parameter corresponding to the CSI-RS, and the indication parameter indicates that the CSI-RS is used for measuring CLI.

Corresponding to the method for measuring CLI, an example of the present disclosure also provides an apparatus for measuring CLI which is applied to an aggressor base station, wherein at least one measurement signal is configured in the aggressor base station, and time-frequency domain resources occupied by some or all of the at least one measurement signal are within an interference measurement window, and the at least one measurement signal corresponds to beams one by one, and different beams have different directions; as shown in Fig. 10, the apparatus includes:

an acquisition unit 101, to obtain second resource configuration information of the aggressor base station, wherein the second resource configuration information indicates time-frequency domain resources occupied by the at least one measurement signal;
a transmission unit 102, to transmit the at least one measurement signal to a victim base station by using different beams according to the second resource configuration information.

In technical solutions provided by examples of the present disclosure, the aggressor base station transmits beam measurement signals to the victim base station by using different beams, and then the victim base station measures different beam measurement signals in the interference measurement window, so as to obtain CLI values of different measurement signals generated by the aggressor base station with respect to the victim base station, that is, CLI values of beams corresponding to different beam measurement signals. Based on the CLI values of different beams generated by the aggressor base station with respect to the victim base station, corresponding technologies for suppressing CLI can be obtained to assist time-frequency resource scheduling among base stations, suppress CLI in different beam directions in the F-TDD communication system, and improve the performance of the F-TDD communication system. In addition, the victim base station measures beam measurement signals corresponding to different beams only within the interference measurement window, which reduces the complexity of interference measurement by the victim base station and saves the energy of the victim base station.

In some examples, the acquisition unit 101 can be specifically to receive the second resource configuration information of the aggressor base station sent by the controller.

In some examples, all measurement signals transmitted by the aggressor base station include a SSB corresponding to a coarse beam and/or a CSI-RS corresponding to a fine beam. A plurality of fine beams is included in a range of the coarse beam.

In some examples, the second resource configuration information of the aggressor base station includes an indication parameter corresponding to the CSI-RS, and the indication parameter indicates that the CSI-RS is used for measuring cross link interference CLI.

In some examples, the apparatus for measuring CLI can further include:

a first reception unit, to receive a beam measurement result set, sent by a controller, obtained by measuring cross link interference CLI via each victim base station, wherein the beam measurement result set comprises a second forbidden beam list and a second preferred beam list, wherein the second forbidden beam list comprises an identity of a measurement signal corresponding to each second forbidden beam in the aggressor base station, and the second preferred beam list comprises an identity of a measurement signal corresponding to each second preferred beam in the aggressor base station; and the second forbidden beam is a beam to be forbidden, and the second preferred beam is a beam to be recommended; and/or

a second reception unit, to receive a third activation message sent by the controller, wherein the third activation message includes an identity of a forbidden window to be activated, and the forbidden window to be activated is a window within which the second forbidden beam is forbidden; in response to determining that a next frame structure period is reached, invalidating a validated forbidden window and validating the forbidden window to be activated according to the third activation message; within the validated forbidden window, forbidding transmitting data to user equipment by using the second forbidden beam, and transmitting data to the user equipment by using the second preferred beam; outside the validated forbidden window, transmitting data to the user equipment by using beams in any direction.

In some examples, there are one or more forbidden windows, and the apparatus for measuring CLI can further include:

an activation unit, to validate, after receiving first configuration information of the forbidden windows sent by the controller, a default forbidden window in all the forbidden windows based on the received first configuration information of the forbidden windows, wherein the first configuration information of each forbidden window indicates slots occupied by the forbidden window.

In some examples, the third activation message can further include first configuration information of the forbidden window to be activated, which indicates slots occupied by the forbidden window to be activated;

The second reception unit is specifically to validate the forbidden window to be activated in slots indicated by the first configuration information of the forbidden window to be activated.

In some examples, a ratio of the second forbidden beam to all beams in the aggressor base station is smaller than a preset ratio.

In some examples, the first configuration information of each forbidden window can include one or more configuration parameters selected from: a reference SCS of the forbidden window, a length of the forbidden window, a period of the forbidden window and an offset of the forbidden window within one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

In some examples, the forbidden window does not exceed the last slot in the frame structure period.

In some examples, in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;
in response to determining that the victim base station is a full-duplex base station and the aggressor base station is a half-duplex base station, the interference measurement window occupies any one or more continuous designated slots which are downlink slots of the aggressor base station; and
in response to determining that the victim base station is a half-duplex base station and the aggressor base station is a full-duplex base station, the interference measurement window occupies any one or more continuous designated slots which are uplink slots of the victim base station.

In some examples, there are one or more interference measurement windows, and a validated interference measurement window is used for measuring CLI; the second configuration information of each interference measurement window includes one or more configuration parameters selected from: a reference SCS of the interference measurement window, a length of the interference measurement window, a period of the interference measurement window and an offset of the interference measurement window in one frame structure period;

the reference SCS of the interference measurement window is a fixed SCS or a SCS of the victim base station;
the length of the interference measurement window is smaller than or equal to the frame structure period;
the period of the interference measurement window is an integer multiple of the frame structure period;
the offset of the interference measurement window in one frame structure period does not exceed a last slot in the frame structure period.

In some examples, the interference measurement window does not exceed the last slot in the frame structure period.

Corresponding to the method for measuring CLI, an example of the present disclosure also provides an apparatus for measuring CLI which is applied to a controller as shown in Fig. 11, the apparatus includes:

an acquisition unit 111, to obtain second configuration information of an interference measurement window in a victim base station and second resource configuration information for measurement signals of each aggressor base station, wherein the second configuration information indicates slots occupied by the interference measurement windows, and the second resource configuration information of each aggressor base station indicates time-frequency domain resources occupied by each measurement signal in the aggressor base station; the measurement signals correspond to beams one by one in each aggressor base station, and different beams have different directions; and

a first sending unit 112, to send the second configuration information to the victim base station, sending the second resource configuration information of each aggressor base station to the aggressor base station, and sending first resource configuration information to the victim base station, wherein the first resource configuration information includes an identity of the first resource configuration information and the second resource configuration information of each aggressor base station, and the identity of the first resource configuration information corresponds to the victim base station one by one.

In technical solutions provided by examples of the present disclosure, the aggressor base station transmit beam measurement signals to the victim base station by using different beams, and then the victim base station measures different beam measurement signals in the interference measurement window, so as to obtain CLI values of different measurement signals generated by the aggressor base station with respect to the victim base station, i.e., CLI values of beams corresponding to different beam measurement signals. Based on the CLI values of different beams generated by the aggressor base station with respect to the victim base station, corresponding technologies for suppressing CLI can be obtained to assist time-frequency resource scheduling among base stations, suppress CLI in different beam directions in the F-TDD communication system, and improve the performance of the F-TDD communication system. In addition, the victim base station measures beam measurement signals corresponding to different beams only within the interference measurement window, which reduces the complexity of interference measurement by the victim base station and saves the energy of the victim base station.

In some examples, the second configuration information can include one or more configuration parameters selected from: a reference SCS of an interference measurement window, a length of an interference measurement window, a period of an interference measurement window and an offset of an interference measurement window in one frame structure period;

the reference SCS of the interference measurement window is a fixed SCS or a SCS of the victim base station;
the length of the interference measurement window is smaller than or equal to the frame structure period;
the period of the interference measurement window is an integer multiple of the frame structure period;
the offset of the interference measurement window in one frame structure period does not exceed a last slot in the frame structure period.

In some examples, the interference measurement window does not exceed the last slot in the frame structure period.

In some examples, in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;
in response to determining that the victim base station is a full-duplex base station and the aggressor base station is a half-duplex base station, the interference measurement window occupies any one or more continuous designated slots which are downlink slots of the aggressor base station; and
in response to determining that the victim base station is a half-duplex base station and the aggressor base station is a full-duplex base station, the interference measurement window occupies any one or more continuous designated slots which are uplink slots of the victim base station.

In some examples, there are one or more interference measurement windows, and a validated interference measurement window is used for measuring CLI; the apparatus for measuring CLI can further include:
a second sending unit, to send a second activation message to the victim base station, wherein the second activation message includes an identity of an interference measurement window to be activated.

In some examples, all measurement signals transmitted by each aggressor base station are a SSB corresponding a coarse beam and/or a CSI-RS corresponding to a fine beam; and a plurality of fine beams are included in a range of the coarse beam.

In some examples, the second resource configuration information of each aggressor base station includes an indication parameter corresponding to the CSI-RS, and the indication parameter indicates that the CSI-RS is used for measuring CLI.

In some examples, there are one or more victim base stations, and apparatus for measuring CLI can further include:

a reception unit, to receive a beam measurement result obtained through measuring the cross link interference CLI sent by each victim base station; and

a determination unit, to determine a second forbidden beam and a second preferred beam in each aggressor base station according to each beam measurement result, wherein the second forbidden beam is a beam to be forbidden and the second preferred beam is a beam to be recommended.

In some examples, the beam measurement result includes an identity of the aggressor base station, an identity of each measurement signal and a CLI value of a beam corresponding to each measurement signal; or

the beam measurement result includes an identity of the aggressor base station, a first forbidden beam list and a first preferred beam list, wherein the first forbidden beam list includes an identity of a measurement signal corresponding to each first forbidden beam, and the first preferred beam list includes an identity of a measurement signal corresponding to each first preferred beam, wherein the first forbidden beam is a beam with a CLI value greater than a first preset CLI threshold, and the first preferred beam is a beam with a CLI value smaller than a second preset CLI threshold; or
the beam measurement result includes an identity of the aggressor base station, a first forbidden beam list and a first preferred beam list, wherein the first forbidden beam list includes an identity of a measurement signal corresponding to each first forbidden beam and a CLI value of each first forbidden beam, and the first preferred beam list includes an identity of a measurement signal corresponding to each first preferred beam and a CLI value of each first preferred beam.

In some examples, the determination unit can be specifically to:

determine a beam corresponding to each first measurement signal as the second forbidden beam in the aggressor base station that transmits the first measurement signal, wherein the first measurement signal is a measurement signal whose identity is comprised in any first forbidden beam list; and
determine a beam corresponding to each second measurement signal as the second preferred beam in the aggressor base station that transmits the second measurement signal, wherein the second measurement signal is a measurement signal whose identity is not comprised in any first forbidden beam list, but is comprised in any first preferred beam list.

In some examples, the determination unit can be specifically to determine, in response to determining that the beam measurement result does not include the first forbidden beam list and the first preferred beam list, the second forbidden beam and the second preferred beam in each aggressor base station according to a CLI value included in each beam measurement result.

In some examples, the determination unit can be specifically to:

determine, in response to determining that any target CLI value of a measurement signal is greater than a first preset CLI threshold, that a beam corresponding to the measurement signal is the second forbidden beam in the aggressor base station that transmits the measurement signal; and
determine, in response to determining that each target CLI value of a measurement signal is smaller than or equal to the first preset CLI threshold and any target CLI value of the measurement signal is smaller than a second preset CLI threshold, that a beam corresponding to the measurement signal is the second preferred beam in the aggressor base station that transmits the measurement signal;
wherein, in response to determining that the CLI value included in the beam measurement result is a current Reference Signal Received Power RSRP of a measurement signal, the target CLI value is the current RSRP included in the beam measurement result, or the target CLI value is RSRP determined according to the current RSRP included in the beam measurement result and a historical RSRP;

in response to determining that the CLI value included in the beam measurement result is the RSRP determined according to the current RSRP and the historical RSRP, the target CLI value is RSRP included in the beam measurement result.

In some examples, in each aggressor base station, a ratio of the second forbidden beam to all beams in the aggressor base station is smaller than a preset ratio;

in each aggressor base station, the number of times that the second forbidden beam is forbidden is greater than the number of times that other beams in the aggressor base station are forbidden.

In some examples, the apparatus for measuring CLI measure can further include:

a third sending unit, to send a first activation message to a target victim base station and a third activation message to a target aggressor base station, wherein the first activation message and the third activation message include an identity of a forbidden window to be activated; the forbidden window to be activated in the target victim base station is a window within which a beam with a same pointing area as that of a first forbidden beam is forbidden; the forbidden window to be activated in the target aggressor base station is a window within which the second forbidden beam is forbidden; the first forbidden beam is a beam with a CLI value, which is measured by the target victim base, greater than the first preset CLI threshold; the target victim base station is a victim base station with the first forbidden beam therein, and the target aggressor base station is an aggressor base station with the second forbidden beam therein; and/or

a fourth sending unit, to send a beam measurement result set obtained by measuring the CLI via each victim base station to the target aggressor base station, wherein the beam measurement result set includes a second forbidden beam list and a second preferred beam list, wherein the second forbidden beam list includes an identity of a measurement signal corresponding to each second forbidden beam in the target aggressor base station, and the second preferred beam list includes an identity of a measurement signal corresponding to each second preferred beam in the target aggressor base station.

In some examples, the first activation message and the third activation message can further include first configuration information of the forbidden window to be activated, which indicates slots occupied by the forbidden window to be activated.

In some examples, the first configuration information of each forbidden window include one or more configuration parameters selected from: a reference SCS of the forbidden window, a length of the forbidden window, a period of the forbidden window and an offset of the forbidden window within one frame structure period;

the reference SCS of the forbidden window is a SCS of the aggressor base station;

the length of the forbidden window is smaller than or equal to the frame structure period;

the period of the forbidden window is an integer multiple of the frame structure period;

the offset of the forbidden window in one frame structure period does not exceed a last slot in the frame structure period.

In some examples, the forbidden window does not exceed the last slot in the frame structure period.

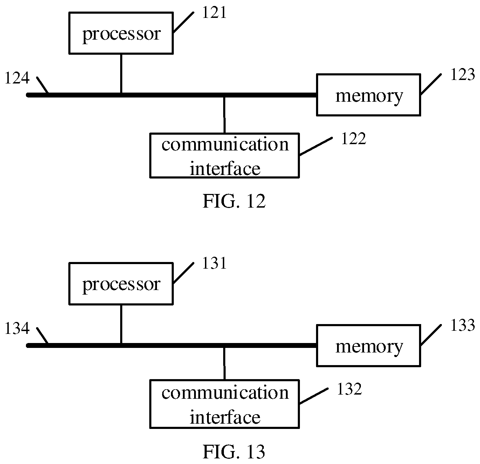

Corresponding to the method for measuring CLI, an example of the present disclosure also provides a base station as shown in Fig. 12, including a processor 121, a communication interface 122, a memory 123 and a communication bus 124, wherein the processor 121, the communication interface 122 and the memory 123 communicate with each other through the communication bus 124;

the memory 123 is to store computer programs;

the processor 121 is to carry out, when executing the programs stored in the memory, any of the methods for measuring CLI applied to the victim base station or the aggressor base station.

In response to determining that the base station is the victim base station, the processor 121, when executing the programs stored in the memory, is to receive within an interference measurement window, different measurement signals transmitted by an aggressor base station using different beams, wherein the measurement signals correspond to the beams one by one, and different beams have different directions; and measure, for each of the measurement signals, a cross link interference CLI value of a beam corresponding to the measurement signal.

In some examples, measuring, for each of the measurement signals, a cross link interference CLI value of a beam corresponding to the measurement signal includes: measuring a current reference signal received power of each measurement signal as the cross link interference CLI value of the beam corresponding to the measurement signal;

or measuring a current RSRP of each measurement signal; and update the cross link interference CLI value of the beam corresponding to each measurement signal according to the current RSRP and a historical RSRP of the measurement signal.

In some examples, the processor 121, when executing the programs stored in the memory, is to generate a beam measurement result based on a CLI value of each beam; and send the beam measurement result to a controller.

In some examples, generating a beam measurement result based on a CLI value of each beam includes: generating, in response to determining that there is a first forbidden beam or a first preferred beam in all the beams used by the aggressor base station, a beam measurement result for the first forbidden beam or the first preferred beam, wherein the first forbidden beam is a beam with a CLI value greater than a first preset CLI threshold, and the first preferred beam is a beam with a CLI value smaller than a second preset CLI threshold.

In some examples, sending the beam measurement result to a controller includes: sending a latest beam measurement result to the control according to a preset reporting period; or sending the beam measurement result to the controller in response to determining that a preset trigger condition is met.

In some examples, the preset reporting period is greater than or equal to a period of interference measurement window, and the preset reporting period is smaller than or equal to a maximum configurable period of the interference measurement window.

In some examples, the preset trigger condition is that a first forbidden beam and/or a first preferred beam in all beams used by the aggressor base station changes, wherein the first forbidden beam is a beam with a CLI value greater than the first preset CLI threshold, and the first preferred beam is a beam with a CLI value smaller than the second preset CLI threshold.

In some examples, the beam measurement result includes an identity of the aggressor base station, an identity of each measurement signal and a CLI value of a beam corresponding to each measurement signal, wherein the first forbidden beam is a beam with a CLI value greater than a first preset CLI threshold, and the first preferred beam is a beam with a CLI value smaller than a second preset CLI threshold; or

the beam measurement result includes an identity of the aggressor base stations, a first forbidden beam list and a first preferred beam list, wherein the first forbidden beam list includes an identity of a measurement signal corresponding to each first forbidden beam, and the first preferred beam list includes an identity of a measurement signal corresponding to each first preferred beam; the first forbidden beam is a beam with a CLI value greater than the first preset CLI threshold, and the first preferred beam is a beam with a CLI value smaller than the second preset CLI threshold; or the beam measurement result includes an identity of the aggressor base station, a first forbidden beam list and a first preferred beam list, wherein the first forbidden beam list includes an identity of a measurement signal corresponding to each first forbidden beam and a CLI value of each first forbidden beam, and the first preferred beam list includes an identity of a measurement signal corresponding to each first preferred beam and a CLI value of each first preferred beam.

In some examples, the processor 121, when executing the programs stored in the memory, is to receive a first activation message sent by the controller, wherein the first activation message includes an identity of a forbidden window to be activated, the forbidden window to be activated is a window within which a beam with a same pointing area as that of the first forbidden beam is forbidden, and the first forbidden beam is a beam with a CLI value greater than the first preset CLI threshold; in response to determining that a next frame structure period is reached, invalidate a validated forbidden window and validate the forbidden window to be activated according to the first activation message; receive, within a validated forbidden window, data transmitted by user equipment by using beams in any direction; forbid, outside the validated forbidden window, receiving data transmitted by user equipment by using a beam with a same pointing area as that of the first forbidden beam.

In some examples, the first activation message further includes first configuration of the forbidden window to be activated, which indicates slots occupied by the forbidden window to be activated;

validating the forbidden window to be activated according to the first activation message includes: validating the forbidden window to be activated in slots indicated by the first configuration information of the forbidden window to be activated.

In some examples, there are one or more forbidden windows; the processor 121, when executing the programs stored in the memory, is to validate, after receiving first configuration information of the forbidden windows sent by the controller, a default forbidden window in all the forbidden windows based on the received first configuration information of the forbidden windows, wherein the first configuration information of each forbidden window indicates slots occupied by the forbidden window.

In some examples, the first configuration information of each forbidden window includes one or more configuration parameters selected from: a reference SCS of the forbidden window, a length of the forbidden window, a period of the forbidden window and an offset of the forbidden window in one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

In some examples, the forbidden window does not exceed the last slot in the frame structure period.

In some examples, in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;
in response to determining that the victim base station is a full-duplex base station and the aggressor base station is a half-duplex base station, the interference measurement window occupies any one or more continuous designated slots which are downlink slots of the aggressor base station; and
in response to determining that the victim base station is a half-duplex base station and the aggressor base station is a full-duplex base station, the interference measurement window occupies any one or more continuous designated slots which are uplink slots of the victim base station.

In some examples, there are one or more interference measurement windows, and a validated interference measurement window is used for measuring CLI; the processor 121, when executing the programs stored in the memory, is to validate, after receiving second configuration information of the interference measurement windows sent by the controller, a default interference measurement window in all the interference measurement windows based on the received second configuration information of the interference measurement windows, wherein the second configuration information of each interference measurement window indicates slots occupied by the interference measurement window; in response to determining that a second activation message sent by the controller, which includes an identity of an interference measurement window to be activated, is received, invalidate the validated interference measurement window and validate the interference measurement window to be activated based on the second activation message in response to determining that a next frame structure period is reached.

In some examples, there are one or more interference measurement windows, and the second configuration information of each interference measurement window includes one or more configuration parameters selected from: a reference SCS of the interference measurement window, a length of the interference measurement window, a period of the interference measurement window and an offset of the interference measurement window in one frame structure period;

the reference SCS of the interference measurement window is a fixed SCS or a SCS of the victim base station;
the length of the interference measurement window is smaller than or equal to the frame structure period;
the period of the interference measurement window is an integer multiple of the frame structure period;
the offset of the interference measurement window in one frame structure period does not exceed a last slot in the frame structure period.

In some examples, the interference measurement window does not exceed the last slot in the frame structure period.

In some examples, the processor 121 when executing the programs stored in the memory, is to receive first resource configuration information sent by a controller, wherein the first resource configuration information includes an identity of the first resource configuration information and second resource configuration information of each aggressor base station, and the identity of the first resource configuration information corresponds to the victim base station one by one, and the second resource configuration information of each aggressor base station indicates time-frequency domain resources occupied by each measurement signal in the aggressor base station.

In some examples, all measurement signals transmitted by each aggressor base station include a SSB corresponding to a coarse beam and/or a CSI-RS corresponding to a fine beam, and a plurality of fine beams are included in a range of the coarse beam.

In some examples, the second resource configuration information of each aggressor base station includes an indication parameter corresponding to the CSI-RS, and the indication parameter indicates that CSI-RS is used for measuring CLI.

In response to determining that the base station is an aggressor base station, at least one measurement signal is configured in the aggressor base station, and time-frequency domain resources occupied by some or all of the at least one measurement signal are within an interference measurement window, and the at least one measurement signal corresponds to beams one by one, and different beams have different directions; the processor 121, when executing the programs stored in the memory, is to obtain second resource configuration information of the aggressor base station, wherein the second resource configuration information indicates time-frequency domain resources occupied by the at least one measurement signal; and transmit the at least measurement signal to a victim base station by using different beams according to the second resource configuration information.

In some examples, obtaining second resource configuration information of the aggressor base station includes: receiving the second resource configuration information of the aggressor base station sent by a controller.

In some examples, all measurement signals transmitted by the aggressor base station include a SSB corresponding to a coarse beam and/or a CSI-RS corresponding to a fine beam. A plurality of fine beams is included in a range of the coarse beam.

In some examples, the second resource configuration information of the aggressor base station includes an indication parameter corresponding to the CSI-RS, and the indication parameter indicates that the CSI-RS is used for measuring cross link interference CLI.

In some examples, the processor 121, when executing the programs stored in the memory, is to:

receive a beam measurement result set, sent by a controller, obtained by measuring cross link interference CLI via each victim base station, wherein the beam measurement result set includes a second forbidden beam list and a second preferred beam list, wherein the second forbidden beam list includes an identity of a measurement signal corresponding to each second forbidden beam in the aggressor base station, and the second preferred beam list includes an identity of a measurement signal corresponding to each second preferred beam in the aggressor base station; and the second forbidden beam is a beam to be forbidden, and the second preferred beam is a beam to be recommended; and/or

receive a third activation message sent by the controller, wherein the third activation message includes an identity of a forbidden window to be activated, wherein the forbidden window to be activated is a window within which the second forbidden beam is forbidden; in response to determining that a next frame structure period is reached, invalidate a validated forbidden window and validate the forbidden window to be activated according to the third activation message; within the validated forbidden window, forbid transmitting data to user equipment by using the second forbidden beam and transmit data to the user equipment by using the second preferred beam; outside the validated forbidden window, transmit data to the user equipment by using beams in any direction.

In some examples, there are one or more forbidden windows; the processor 121 when executing the programs stored in the memory, is to validate, after receiving first configuration information of the forbidden windows sent by the controller, a default forbidden window in all the forbidden windows based on the received first configuration information of the forbidden windows, wherein the first configuration information of each forbidden window indicates slots occupied by the forbidden window.

In some examples, the third activation message further includes first configuration information of the forbidden window to be activated, which indicates slots occupied by the forbidden window to be activated;

validating the forbidden window to be activated according to the third activation message includes: validating the forbidden window to be activated in slots indicated by the first configuration information of the forbidden window to be activated.

In some examples, a ratio of the second forbidden beam to all beams in the aggressor base station is smaller than a preset ratio.

In some examples, the first configuration information of each forbidden window includes one or more configuration parameters selected from: a reference SCS of the forbidden window, a length of the forbidden window, a period of the forbidden window and an offset of the forbidden window within one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

In some examples, the forbidden window does not exceed the last slot in the frame structure period.

In some examples, in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;

in response to determining that the victim base station is a full-duplex base station and the aggressor base station is a half-duplex base station, the interference measurement window occupies any one or more continuous designated slots which are downlink slots of the aggressor base station; and

in response to determining that the victim base station is a half-duplex base station and the aggressor base station is a full-duplex base station, the interference measurement window occupies any one or more continuous designated slots which are uplink slots of the victim base station.

In some examples, there are one or more interference measurement windows, and a validated interference measurement window is used for measuring CLI; the second configuration information of each interference measurement window includes one or more configuration parameters selected from: a reference Sub Carrier Space SCS of the interference measurement window, a length of the interference measurement window, a period of the interference measurement window and an offset of the interference measurement window in one frame structure period;

the reference SCS of the interference measurement window is a fixed SCS or a SCS of the victim base station;
the length of the interference measurement window is smaller than or equal to the frame structure period;
the period of the interference measurement window is an integer multiple of the frame structure period;
the offset of the interference measurement window in one frame structure period does not exceed a last slot in the frame structure period.

In some examples, the interference measurement window does not exceed the last slot in the frame structure period.

Corresponding to the method for measuring CLI, an example of the present disclosure also provides a controller as shown in Fig. 13, including a processor 131, a communication interface 132, a memory 133 and a communication bus 134, wherein the processor 131, the communication interface 132 and the memory 133 communicate with each other through the communication bus 134;

the memory 133 is to store computer programs;
the processor 131 is to carry out, when executing the programs stored in the memory, any of the methods for measuring CLI applied to the controller.

In the example of the present disclosure, the processor 131, when executing the programs stored in the memory, is to: obtain second configuration information of an interference measurement window in a victim base station and second resource configuration information for measurement signals of each aggressor base station, wherein the second configuration information indicates slots occupied by the interference measurement windows, and the second resource configuration information of each aggressor base station indicates time-frequency domain resources occupied by each measurement signal in the aggressor base station; the measurement signals correspond to beams one by one in each aggressor base station, and different beams have different directions; send the second configuration information to the victim base station, send the second resource configuration information for each aggressor base station to this aggressor base station, and send first resource configuration information to the victim base station, wherein the first resource configuration information includes an identity of the first resource configuration information and the second resource configuration information of each aggressor base station, and the identity of the first resource configuration information corresponds to the victim base station one by one.

In some examples, the second configuration information includes one or more configuration parameters selected from: a reference SCS of the interference measurement window, a length of the interference measurement window, a period of the interference measurement window and an offset of the interference measurement window in one frame structure period;

the reference SCS of the interference measurement window is a fixed SCS or a SCS of the victim base station;
the length of the interference measurement window is smaller than or equal to the frame structure period;
the period of the interference measurement window is an integer multiple of the frame structure period;
the offset of the interference measurement window in one frame structure period does not exceed a last slot in the frame structure period.

In some examples, the interference measurement window does not exceed the last slot in the frame structure period.

In some examples, in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;

in response to determining that the victim base station is a full-duplex base station and the aggressor base station is a half-duplex base station, the interference measurement window occupies any one or more continuous designated slots which are downlink slots of the aggressor base station; and

in response to determining that the victim base station is a half-duplex base station and the aggressor base station is a full-duplex base station, the interference measurement window occupies any one or more continuous designated slots which are uplink slots of the victim base station.

In some examples, there are one or more interference measurement windows, and a validated interference measurement window is used for measuring CLI; the processor 131, when executing the programs stored in the memory, is to send a second activation message to the victim base station, wherein the second activation message includes an identity of an interference measurement window to be activated.

In some examples, all measurement signals transmitted by each aggressor base station include a SSB corresponding to a coarse beam and/or a CSI-RS corresponding to a fine beam; and a plurality of fine beams are included in a range of the coarse beam.

In some examples, the second resource configuration information of each aggressor base station includes an indication parameter corresponding to the CSI-RS, and the indication parameter indicates that the CSI-RS is used for measuring cross link interference CLI.

In some examples, there are one or more victim base stations; the processor 131, when executing the programs stored in the memory, is to receive a beam measurement result obtained through measuring the cross link interference CLI transmitted by each victim base station; and determine a second forbidden beam and a second preferred beam in each aggressor base station according to each beam measurement result, wherein the second forbidden beam is a beam to be forbidden and the second preferred beam is a beam to be recommended.

In some examples, the beam measurement result includes an identity of the aggressor base station, an identity of each measurement signal and a CLI value of bean corresponding to each measurement signal; or

the beam measurement result includes an identity of the aggressor base station, a first forbidden beam list and a first preferred beam list, wherein the first forbidden beam list includes an identity of a measurement signal corresponding to each first forbidden beam, and the first preferred beam list includes an identity of a measurement signal corresponding to each first preferred beam; the first forbidden beam is a beam with a CLI value greater than a first preset CLI threshold, and the first preferred beam is a beam with a CLI value smaller than a second preset CLI threshold; or

the beam measurement result includes an identity of the aggressor base station, a first forbidden beam list and a first preferred beam list, wherein the first forbidden beam list includes an identity of a measurement signal corresponding to each first forbidden beam and a CLI value of each first forbidden beam, and the first preferred beam list includes an identity of a measurement signal corresponding to each first preferred beam and a CLI value of each first preferred beam.

In some examples, in response to determining that the beam measurement result includes the first forbidden beam list and the first preferred beam list, determining a second forbidden beam and a second preferred beam in each aggressor base station according to each beam measurement result includes: determining a beam corresponding to each first measurement signal as the second forbidden beam in an aggressor base station that transmits the first measurement signal, wherein the first measurement signal is a measurement signal whose identity is included in any first forbidden beam list; determining a beam corresponding to each second measurement signal as the second preferred beam in an aggressor base station that transmits the second measurement signal, wherein the second measurement signal is a measurement signal whose identity is not comprised in any first forbidden beam list, but is comprised in any first preferred beam list.

In some examples, in response to determining that the beam measurement result does not include the first forbidden beam list and the first preferred beam list, determining a second forbidden beam and a second preferred beam in each aggressor base station according to each beam measurement result includes: determining the second forbidden beam and the second preferred beam in each aggressor base station according to a CLI value included in each beam measurement result.

In some examples, determining the second forbidden beam and the second preferred beam in each aggressor base station according to a CLI value included in each beam measurement result includes: determining, in response to determining that any target CLI value of a measurement signal is greater than the first preset CLI threshold, that a beam corresponding to the measurement signal is the second forbidden beam in an aggressor base station that transmits the measurement signal; determining, in response to determining that each target CLI value of a measurement signal is smaller than or equal to the first preset CLI threshold and any target CLI value of the measurement signal is smaller than the second preset CLI threshold, that a beam corresponding to the measurement signal is the second preferred beam in an aggressor base station that transmits the measurement signal;

wherein, in response to determining that a CLI value included in the beam measurement result is a current reference signal received power RSRP of a measurement signal, the target CLI value is the current RSRP included in the beam measurement result, or the target CLI value is a RSRP determined according to the current RSRP included in the beam measurement result and a historical RSRP;

in response to determining that the CLI value included in the beam measurement result is the RSRP determined according to the current RSRP and the historical RSRP, the target CLI value is RSRP included in the beam measurement result.

In some examples, in each aggressor base station, a ratio of the second forbidden beam to all beams in the aggressor base station is smaller than a preset ratio;

in each aggressor base station, the number of times that the second forbidden beam is forbidden is greater than the number of times that other beams in the aggressor base station are forbidden.

In some examples, the processor 131 when executing the programs stored in the memory, is to:

send a first activation message to a target victim base station and a third activation message to a target aggressor base station, wherein the first activation message and the third activation message include an identity of a forbidden window to be activated; the forbidden window to be activated in the target victim base station is a window within which a beam with a same pointing area as that of a first forbidden beam is forbidden; the forbidden window to be activated in the target aggressor base station is a window within which the second forbidden beam is forbidden; the first forbidden beam is a beam with a CLI value measured by the target victim base, greater than a first preset CLI threshold; the target victim base station is a victim base station with the first forbidden beam therein, and the target aggressor base station is an aggressor base station with the second forbidden beam therein; and/or

send a beam measurement result set obtained by measuring the CLI via each victim base station to the target aggressor base station, wherein the beam measurement result set includes a second forbidden beam list and a second preferred beam list, wherein the second forbidden beam list includes an identity of a measurement signal corresponding to each second forbidden beam in the target aggressor base station, and the second preferred beam list includes an identity of a measurement signal corresponding to each second preferred beam in the target aggressor base station.

In some examples, the first activation message and the third activation message further include first configuration information of the forbidden window to be activated, which indicates slots occupied by the forbidden window to be activated.

In some examples, the first configuration information of each forbidden window include one or more configuration parameters selected from: a reference SCS of the forbidden window, a length of the forbidden window, a period of the forbidden window and an offset of the forbidden window within one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

In some examples, the forbidden window does not exceed the last slot in the frame structure period.

The communication bus can be a peripheral component interconnect (PCI) bus or an extended industry standard architecture (EISA) bus. The communication bus can be divided into address bus, data bus and control bus. For the convenience of representation, the bus is only represented by a thick line in Figures, but it does not mean that there is only one bus or one type of bus.

The communication interface is for communication between the base station or controller and other devices.

The memory may include Random Access Memory (RAM) or Non-Volatile Memory (NVM), such as at least one disk memory. In an example, the memory can also be at least one storage device located far away from the processor.

The processor can be a general-purpose processor, including a Central Processing Unit (CPU) and a Network Processor (NP). The processor can also be a Digital Signal Processor (DSP), an Application Specific Integrated Circuit (ASIC), a Field-Programmable Gate Array (FPGA) or other programmable logic devices, discrete gate or transistor logic devices, and discrete hardware components.

An example of the present disclosure also provides a computer-readable storage medium having computer programs stored therein, and the computer program, when executed by a processor, carry out any of the methods for measuring CLI.

In yet another example provided by the present disclosure, there is also provided a computer program product containing instructions, which, when running on a computer, causes the computer to carry out any of the methods for measuring CLI described in any of the examples.

In the above examples, it may be implemented in whole or in part by software, hardware, firmware or any combination thereof. When implemented in software, it can be implemented in whole or in part in the form of a computer procedure product. The computer procedure product includes one or more computer instructions. When the computer procedure instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as DVD), or semiconductor media (such as Solid State Disk (SSD)) and the like.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the example of the apparatus, base station, controller, computer-readable storage medium and computer program product, the description is relatively simple because it is basically similar to the example of the method, and the relevant points can be referred to the partial description of the example of the method.

The above descriptions are only preferred examples of the disclosure, and are not intended to limit the disclosure. Any modifications, equivalent replacements, improvements and the like made within the spirit and principles of the disclosure shall be included within the scope of protection of the disclosure.

**Claims**

1. A method for measuring cross link interference, applied to a victim base station, comprising:

   receiving within an interference measurement window, different measurement signals transmitted by an aggressor base station using different beams, wherein the measurement signals correspond to the beams one by one, and the different beams have different directions; and
   measuring, for each measurement signal, a cross link interference CLI value of a beam corresponding to the measurement signal.

2. The method according to claim 1, wherein measuring, for each measurement signal, a cross link interference CLI value of a beam corresponding to the measurement signal comprises:

   measuring a current reference signal received power RSRP of each measurement signal as the cross link interference CLI value of the beam corresponding to the measurement signal; or
   measuring a current RSRP of each measurement signal; and updating the cross link interference CLI value of the beam corresponding to each measurement signal according to the current RSRP and a historical RSRP of the measurement signal.

3. The method according to claim 1, wherein the method further comprises:

generating a beam measurement result based on a CLI value of each beam; and
sending the beam measurement result to a controller.

4. The method according to claim 3, wherein generating a beam measurement result based on a CLI value of each beam comprises:

in response to determining that there is a first forbidden beam or a first preferred beam in all beams used by the aggressor base station, generating a beam measurement result for the first forbidden beam or the first preferred beam, wherein the first forbidden beam is a beam with a CLI value greater than a first preset CLI threshold, and the first preferred beam is a beam with a CLI value smaller than a second preset CLI threshold.

5. The method according to claim 3, wherein sending the beam measurement result to a controller comprises:

sending a latest beam measurement result to the controller according to a preset reporting period; or
sending the beam measurement result to the controller in response to determining that a preset trigger condition is met.

6. The method according to claim 5, wherein the preset reporting period is greater than or equal to a period of the interference measurement window, and is smaller than or equal to a maximum configurable period of the interference measurement window.

7. The method according to claim 5, wherein the preset trigger condition is that a first forbidden beam and/or a first preferred beam in all beams used by the aggressor base station changes, wherein the first forbidden beam is a beam with a CLI value greater than a first preset CLI threshold, and the first preferred beam is a beam with a CLI value smaller than a second preset CLI threshold.

8. The method according to any one of claims 3-7, wherein,

the beam measurement result comprises an identity of the aggressor base station, an identity of each measurement signal and a CLI value of a beam corresponding to each measurement signal, wherein the first forbidden beam is a beam with a CLI value greater than a first preset CLI threshold, and the first preferred beam is a beam with a CLI value smaller than a second preset CLI threshold; or
the beam measurement result comprises an identity of the aggressor base station, a first forbidden beam list and a first preferred beam list, wherein the first forbidden beam list comprises an identity of a measurement signal corresponding to each first forbidden beam, and the first preferred beam list comprises an identity of a measurement signal corresponding to each first preferred beam, wherein the first forbidden beam is a beam with a CLI value greater than a first preset CLI threshold, and the first preferred beam is a beam with a CLI value smaller than a second preset CLI threshold; or
the beam measurement result comprises an identity of the aggressor base station, a first forbidden beam list and a first preferred beam list, wherein the first forbidden beam list comprises an identity of a measurement signal corresponding to each first forbidden beam and a CLI value of each first forbidden beam, and the first preferred beam list comprises an identity of a measurement signal corresponding to each first preferred beam and a CLI value of each first preferred beam.

9. The method according to any one of claims 3-7, wherein the method further comprises:
receiving a first activation message sent by the controller, wherein the first activation message comprises an identity of a forbidden window to be activated, the forbidden window to be activated is a window within which a beam with a same pointing area as that of a first forbidden beam is forbidden, wherein the first forbidden beam is a beam with a CLI value greater than a first preset CLI threshold; in response to determining that a next frame structure period is reached, invalidating a validated forbidden window and validating the forbidden window to be activated according to the first activation message; receiving, within a validated forbidden window, data transmitted by a user equipment by using beams in any direction; forbidding, outside the validated forbidden window, receiving data transmitted by the user equipment by using the beam with the same pointing area as that of the first forbidden beam.

10. The method according to claim 9, wherein the first activation message further comprises first configuration information of the forbidden window to be activated, which indicates slots occupied by the forbidden window to be activated; wherein validating the forbidden window to be activated according to the first activation message comprises:
validating the forbidden window to be activated in the slots indicated by the first configuration information of the forbidden window to be activated.

11. The method according to claim 9, wherein there are one or more forbidden windows, and the method further comprises:

after receiving first configuration information of the forbidden windows sent by the controller, validating a default forbidden window in all the forbidden windows based on the received first configuration information of the forbidden windows, wherein the first configuration information of each forbidden window indicates slots occupied by the forbidden window.

12. The method according to claim 11, wherein the first configuration information of each forbidden window comprises one or more configuration parameters selected from: a reference sub carrier space SCS of the forbidden window, a length of the forbidden window, a period of the forbidden window and an offset of the forbidden window in one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

13. The method according to claim 12, wherein the forbidden window does not exceed the last slot in the frame structure period.

14. The method according to any one of claims 1-7, wherein,

in response to determining that the victim base station and the aggressor base station are full-duplex base stations, the interference measurement window occupies any one or more continuous slots;
in response to determining that the victim base station and the aggressor base station are half-duplex base stations, the interference measurement window occupies any one or more continuous designated slots which are flexible slots, or are uplink slots of the victim base station and downlink slots of the aggressor base station;
in response to determining that the victim base station is a full-duplex base station and the aggressor base station is a half-duplex base station, the interference measurement window occupies any one or more continuous designated slots which are downlink slots of the aggressor base station; and
in response to determining that the victim base station is a half-duplex base station and the aggressor base station is a full-duplex base station, the interference measurement window occupies any one or more continuous designated slots which are uplink slots of the victim base station.

15. The method according to any one of claims 1-7, wherein there are one or more interference measurement windows, and a validated interference measurement window is used for measuring CLI; and the method further comprises:

after receiving second configuration information of the interference measurement windows sent by a controller, validating a default interference measurement window in all the interference measurement windows based on the received second configuration information of the interference measurement windows, wherein the second configuration information of each interference measurement window indicates slots occupied by the interference measurement window; and
in response to determining that a second activation message sent by a controller, which comprises an identifier of an interference measurement window to be activated, is received, invalidating a validated interference measurement window and validating the interference measurement window to be activated according to the second activation message in response to determining that a next frame structure period is reached.

16. The method according to any one of claims 1-7, wherein there are one or more interference measurement windows, and second configuration information of each interference measurement window comprises one or more configuration parameters selected from: a reference sub carrier space SCS of the interference measurement window, a length of the interference measurement window, a period of the interference measurement window and an offset of the interference measurement window in one frame structure period;

the reference SCS of the interference measurement window is a fixed SCS or a SCS of the victim base station;
the length of the interference measurement window is smaller than or equal to the frame structure period;

the period of the interference measurement window is an integer multiple of the frame structure period;

the offset of the interference measurement window in one frame structure period does not exceed a last slot in the frame structure period.

17. The method according to claim 16, wherein the interference measurement window does not exceed the last slot in the frame structure period.

18. The method according to any one of claims 1-7, wherein the method further comprises:
receiving first resource configuration information sent by a controller, wherein the first resource configuration information comprises an identity of the first resource configuration information and second resource configuration information of each aggressor base station, and the identity of the first resource configuration information corresponds to the victim base station one by one, and the second resource configuration information of each aggressor base station indicates time-frequency domain resources occupied by each measurement signal in the aggressor base station.

19. The method according to claim 18, wherein all measurement signals transmitted by each aggressor base station comprise a synchronization signal block SSB corresponding to a coarse beam and/or a channel state information-reference signal CSI-RS corresponding to a fine beam; and a plurality of fine beams are comprised in a range of the coarse beam.

20. The method according to claim 19, wherein the second resource configuration information of each aggressor base station comprises an indication parameter corresponding to the CSI-RS, and the indication parameter indicates that the CSI-RS is used for measuring CLI.

21. A method for measuring cross link interference, applied to an aggressor base station, wherein at least one measurement signal is configured in the aggressor base station, time-frequency domain resources occupied by some or all of the at least one measurement signal are within an interference measurement window, the at least one measurement signal corresponds to beams one by one, and different beams have different directions; the method comprises:

obtaining second resource configuration information of the aggressor base station, wherein the second resource configuration information indicates time-frequency domain resources occupied by the at least one measurement signal; and
transmitting the at least one measurement signal to a victim base station by using different beams according to the second resource configuration information.

22. The method according to claim 21, wherein obtaining second resource configuration information of the aggressor base station comprises:
receiving the second resource configuration information of the aggressor base station sent by a controller.

23. The method according to claim 21 or 22, wherein all measurement signals transmitted by the aggressor base station comprise a synchronization signal block SSB corresponding to a coarse beam and/or a channel state information-reference signal CSI-RS corresponding to a fine beam; and a plurality of fine beams are comprised in a range of the coarse beam.

24. The method according to claim 23, wherein the second resource configuration information of the aggressor base station comprises an indication parameter corresponding to the CSI-RS, and the indication parameter indicates that the CSI-RS is used for measuring cross link interference CLI.

25. The method according to claim 21, wherein the method further comprises:

receiving a beam measurement result set, sent by a controller, obtained by measuring cross link interference CLI via each victim base station, wherein the beam measurement result set comprises a second forbidden beam list and a second preferred beam list, wherein the second forbidden beam list comprises an identity of a measurement signal corresponding to each second forbidden beam in the aggressor base station, and the second preferred beam list comprises an identity of a measurement signal corresponding to each second preferred beam in the aggressor base station; and the second forbidden beam is a beam to be forbidden, and the second preferred beam is a beam to be recommended; and/or

receiving a third activation message sent by the controller, wherein the third activation message comprises an identity of a forbidden window to be activated, and the forbidden window to be activated is a window within which the second forbidden beam is forbidden; in response to determining that a next frame structure period is reached, invalidating a validated forbidden window and validating the forbidden window to be activated according to the third activation message; within the validated forbidden window, forbidding transmitting data to user equipment by using the second forbidden beam, and transmitting data to the user equipment by using the second preferred beam; outside the validated forbidden window, transmitting data to the user equipment by using beams in any direction.

26. The method according to claim 25, wherein there are one or more forbidden windows, and the method further comprises:
after receiving first configuration information of the forbidden windows sent by the controller, validating a default forbidden window in all the forbidden windows based on the received first configuration information of the forbidden windows, wherein the first configuration information of each forbidden window indicates slots occupied by the forbidden window.

27. The method according to claim 25, wherein the third activation message further comprises first configuration information of the forbidden window to be activated, which indicates slots occupied by the forbidden window to be activated;
wherein validating the forbidden window to be activated according to the third activation message comprises:
validating the forbidden window to be activated in slots indicated by the first configuration information of the forbidden window to be activated.

28. The method according to any one of claims 25-27, wherein a ratio of the second forbidden beam to all beams in the aggressor base station is smaller than a preset ratio.

29. The method according to any one of claims 25-27, wherein the first configuration information of each forbidden window comprises one or more configuration parameters selected from: a reference sub carrier space SCS of the forbidden window, a length of the forbidden window, a period of the forbidden window and an offset of the forbidden window in one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

30. The method according to claim 29, wherein the forbidden window does not exceed the last slot in the frame structure period.

31. The method according to claim 21, wherein,

in response to determining that the victim base station and the aggressor base station are full-duplex base stations, the interference measurement window occupies any one or more continuous slots;
in response to determining that the victim base station and the aggressor base station are half-duplex base stations, the interference measurement window occupies any one or more continuous designated slots which are flexible slots, or are uplink slots of the victim base station and downlink slots of the aggressor base station;
in response to determining that the victim base station is a full-duplex base station and the aggressor base station is a half-duplex base station, the interference measurement window occupies any one or more continuous designated slots which are downlink slots of the aggressor base station; and
in response to determining that the victim base station is a half-duplex base station and the aggressor base station is a full-duplex base station, the interference measurement window occupies any one or more continuous designated slots which are uplink slots of the victim base station.

32. The method according to claim 21, wherein there are one or more interference measurement windows, and a validated interference measurement window is used for measuring CLI; second configuration information of each interference measurement window comprises one or more configuration parameters selected from: a reference sub carrier space SCS of the interference measurement window, a length of the interference measurement window, a period of the interference measurement window and an offset of the interference measurement window in one frame structure period;

the reference SCS of the interference measurement window is a fixed SCS or a SCS of the victim base station; the length of the interference measurement window is smaller than or equal to the frame structure period; the period of the interference measurement window is an integer multiple of the frame structure period; and the offset of the interference measurement window in one frame structure period does not exceed a last slot in the frame structure period.

33. The method according to claim 32, wherein the interference measurement window does not exceed the last slot in the frame structure period.

34. A method for measuring cross link interference, applied to a controller, comprising:

obtaining second configuration information of an interference measurement window in a victim base station and second resource configuration information for measurement signals of each aggressor base station, wherein the second configuration information indicates slots occupied by the interference measurement window, and the second resource configuration information of each aggressor base station indicates time-frequency domain resources occupied by each measurement signal in the aggressor base station; the measurement signals correspond to beams one by one in each aggressor base station, and different beams have different directions; and

sending the second configuration information to the victim base station, sending the second resource configuration information for each aggressor base station to the aggressor base station, and sending first resource configuration information to the victim base station, wherein the first resource configuration information comprises an identity of the first resource configuration information and the second resource configuration information of each aggressor base station, and the identity of the first resource configuration information corresponds to the victim base station one by one.

35. The method according to claim 34, wherein the second configuration information comprises one or more configuration parameters selected from: a reference sub carrier space SCS of the interference measurement window, a length of the interference measurement window, a period of the interference measurement window and an offset of the interference measurement window in one frame structure period;

the reference SCS of the interference measurement window is a fixed SCS or a SCS of the victim base station; the length of the interference measurement window is smaller than or equal to the frame structure period; the period of the interference measurement window is an integer multiple of the frame structure period; the offset of the interference measurement window in one frame structure period does not exceed a last slot in the frame structure period.

36. The method according to claim 35, wherein the interference measurement window does not exceed the last slot in the frame structure period.

37. The method according to claim 34, wherein,

in response to determining that the victim base station and the aggressor base station are full-duplex base stations, the interference measurement window occupies any one or more continuous slots;
in response to determining that the victim base station and the aggressor base station are half-duplex base stations, the interference measurement window occupies any one or more continuous designated slots which are flexible slots, or are uplink slots of the victim base station and downlink slots of the aggressor base station;
in response to determining that the victim base station is a full-duplex base station and the aggressor base station is a half-duplex base station, the interference measurement window occupies any one or more continuous designated slots which are downlink slots of the aggressor base station; and
in response to determining that the victim base station is a half-duplex base station and the aggressor base station is a full-duplex base station, the interference measurement window occupies any one or more continuous designated slots which are uplink slots of the victim base station.

38. The method according to claim 34, wherein there are one or more interference measurement windows, and a validated interference measurement window is used for measuring CLI; and the method further comprises:

sending a second activation message to the victim base station, wherein the second activation message comprises an identity of an interference measurement window to be activated.

39. The method according to claim 34, wherein all measurement signals transmitted by each aggressor base station comprise a synchronization signal block SSB corresponding to a coarse beam and/or a channel state information-reference signal CSI-RS corresponding to a fine beam; and a plurality of fine beams are comprised in a range of the coarse beam.

40. The method according to claim 39, wherein the second resource configuration information of each aggressor base station comprises an indication parameter corresponding to the CSI-RS, and the indication parameter indicates that the CSI-RS is used for measuring CLI.

41. The method according to claim 34, wherein there are one or more victim base stations, and the method further comprises:

receiving a beam measurement result obtained through measuring the cross link interference CLI transmitted by each victim base station; and
determining a second forbidden beam and a second preferred beam in each aggressor base station according to each beam measurement result, wherein the second forbidden beam is a beam to be forbidden and the second preferred beam is a beam to be recommended.

42. The method according to claim 41, wherein,

the beam measurement result comprises an identity of the aggressor base station, an identity of each measurement signal and a CLI value of a beam corresponding to each measurement signal; or
the beam measurement result comprises an identity of the aggressor base station, a first forbidden beam list and a first preferred beam list, wherein the first forbidden beam list comprises an identity of a measurement signal corresponding to each first forbidden beam, and the first preferred beam list comprises an identity of a measurement signal corresponding to each first preferred beam, wherein the first forbidden beam is a beam with a CLI value greater than a first preset CLI threshold, and the first preferred beam is a beam with a CLI value smaller than a second preset CLI threshold; or
the beam measurement result comprises an identity of the aggressor base station, a first forbidden beam list and a first preferred beam list, wherein the first forbidden beam list comprises an identity of a measurement signal corresponding to each first forbidden beam and a CLI value of each first forbidden beam, and the first preferred beam list comprises an identity of a measurement signal corresponding to each first preferred beam and a CLI value of each first preferred beam.

43. The method according to claim 42, wherein in response to determining that the beam measurement result comprises the first forbidden beam list and the first preferred beam list,
wherein determining a second forbidden beam and a second preferred beam in each aggressor base station according to each beam measurement result comprises:

determining a beam corresponding to each first measurement signal as the second forbidden beam in the aggressor base station that transmits the first measurement signal, wherein the first measurement signal is a measurement signal whose identity is comprised in any first forbidden beam list; and
determining a beam corresponding to each second measurement signal as the second preferred beam in the aggressor base station that transmits the second measurement signal, wherein the second measurement signal is a measurement signal whose identity is not comprised in any first forbidden beam list, but is comprised in any first preferred beam list.

44. The method according to claim 42, wherein in response to determining that the beam measurement result does not comprise the first forbidden beam list and the first preferred beam list,
wherein determining a second forbidden beam and a second preferred beam in each aggressor base station according to each beam measurement result comprises:
determining the second forbidden beam and the second preferred beam in each aggressor base station according to a CLI value comprised in each beam measurement result.

45. The method according to claim 44, wherein determining the second forbidden beam and the second preferred beam in each aggressor base station according to a CLI value comprised in each beam measurement result comprises:

in response to determining that any target CLI value of a measurement signal is greater than a first preset CLI threshold, determining that a beam corresponding to the measurement signal is the second forbidden beam in the aggressor base station that transmits the measurement signal; and

in response to determining that each target CLI value of a measurement signal is smaller than or equal to the first preset CLI threshold and any target CLI value of the measurement signal is smaller than a second preset CLI threshold, determining that a beam corresponding to the measurement signal is the second preferred beam in the aggressor base station that transmits the measurement signal;

wherein, in response to determining that the CLI value comprised in the beam measurement result is a current reference signal received power RSRP of the measurement signal, the target CLI value is the current RSRP comprised in the beam measurement result, or the target CLI value is a RSRP determined according to the current RSRP comprised in the beam measurement result and a historical RSRP;

in response to determining that the CLI value comprised in the beam measurement result is the RSRP determined according to the current RSRP and the historical RSRP, the target CLI value is the RSRP comprised in the beam measurement result.

46. The method according to any one of claims 41-45, wherein in each aggressor base station, a ratio of the second forbidden beam to all beams in the aggressor base station is smaller than a preset ration; and

in each aggressor base station, a number of times that the second forbidden beam is forbidden is greater than a number of times that other beams in the aggressor base station are forbidden.

47. The method according to claim 41, wherein the method further comprises:

sending a first activation message to a target victim base station and sending a third activation message to a target aggressor base station, wherein the first activation message and the third activation message comprise an identity of a forbidden window to be activated; the forbidden window to be activated in the target victim base station is a window within which a beam with a same pointing area as that of a first forbidden beam is forbidden, and the forbidden window to be activated in the target aggressor base station is a window within which the second forbidden beam is forbidden, wherein the first forbidden beam is a beam with a CLI value measured by the target victim base, greater than a first preset CLI threshold; the target victim base station is a victim base station with the first forbidden beam therein and the target aggressor base station is an aggressor base station with the second forbidden beam therein; and/or

sending a beam measurement result set obtained by measuring the CLI via each victim base station to the target aggressor base station, wherein the beam measurement result set comprises a second forbidden beam list and a second preferred beam list, wherein the second forbidden beam list comprises an identity of a measurement signal corresponding to each second forbidden beam in the target aggressor base station, and the second preferred beam list comprises an identity of a measurement signal corresponding to each second preferred beam in the target aggressor base station.

48. The method according to claim 47, wherein the first activation message and the third activation message further comprise first configuration information of the forbidden window to be activated, which indicates slots occupied by the forbidden window to be activated.

49. The method according to claim 47, wherein first configuration information of each forbidden window comprises one or more configuration parameters selected from: a reference sub carrier space SCS of the forbidden window, a length of the forbidden window, a period of the forbidden window and an offset of the forbidden window in one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

50. The method according to claim 49, wherein the forbidden window does not exceed the last slot in the frame structure period.

**51.** An apparatus for measuring cross link interference, applied to a victim base station, comprising:

a first reception unit, to receive within an interference measurement window, different measurement signals transmitted by an aggressor base station using different beams, wherein the measurement signals correspond to the beams one by one, and the different beams have different directions; and
a measurement unit, to measure, for each measurement signal, a cross link interference CLI value of a beam corresponding to the measurement signal.

**52.** The apparatus according to claim 51, wherein the measurement unit is specifically to:

measure a current reference signal received power RSRP of each measurement signal as the cross link interference CLI value of the beam corresponding to the measurement signal; or
measure a current RSRP of each measurement signal; and update the cross link interference CLI value of the beam corresponding to each measurement signal according to the current RSRP and a historical RSRP of the measurement signal.

**53.** The apparatus according to claim 51, wherein the apparatus further comprises:

a generation unit, to generate a beam measurement result based on a CLI value of each beam; and
a sending unit, to send the beam measurement result to a controller.

**54.** The apparatus according to claim 53, wherein the generation unit is specifically to:
generate, in response to determining that there is a first forbidden beam or a first preferred beam in all the beams used by the aggressor base station, a beam measurement result for the first forbidden beam or the first preferred beam, wherein the first forbidden beam is a beam with a CLI value greater than a first preset CLI threshold, and the first preferred beam is a beam with a CLI value smaller than a second preset CLI threshold.

**55.** The apparatus according to claim 53, wherein the sending unit is specifically to:

send a latest beam measurement result to the controller according to a preset reporting period; or
send the beam measurement result to the controller in response to determining that a preset trigger condition is met.

**56.** The apparatus according to claim 55, wherein the preset reporting period is greater than or equal to a period of the interference measurement window, and is smaller than or equal to a maximum configurable period of the interference measurement window.

**57.** The apparatus according to claim 55, wherein the preset trigger condition is that a first forbidden beam and/or a first preferred beam in all of the beams used by the aggressor base station changes, wherein the first forbidden beam is a beam with a CLI value greater than a first preset CLI threshold, and the first preferred beam is a beam with a CLI value smaller than a second preset CLI threshold.

**58.** The apparatus according to any one of claims 53 to 57, wherein,

the beam measurement result comprises an identity of the aggressor base station, an identity of each measurement signal and a CLI value of a beam corresponding to each measurement signal, wherein the first forbidden beam is a beam with a CLI value greater than a first preset CLI threshold, and the first preferred beam is a beam with a CLI value smaller than a second preset CLI threshold; or
the beam measurement result comprises an identity of the aggressor base station, a first forbidden beam list and a first preferred beam list, wherein the first forbidden beam list comprises an identity of a measurement signal corresponding to each first forbidden beam, and the first preferred beam list comprises an identity of a measurement signal corresponding to each first preferred beam, wherein the first forbidden beam is a beam with a CLI value greater than a first preset CLI threshold, and the first preferred beam is a beam with a CLI value smaller than a second preset CLI threshold; or
the beam measurement result comprises an identity of the aggressor base station, a first forbidden beam list and a first preferred beam list, wherein the first forbidden beam list comprises an identity of a measurement signal corresponding to each first forbidden beam and a CLI value of each first forbidden beam, and the first preferred beam list comprises an identity of a measurement signal corresponding to each first preferred beam and a CLI value of each first preferred beam.

59. The apparatus according to any one of claims 53-57, wherein the apparatus further comprises:
a second reception unit, to receive a first activation message sent by the controller, wherein the first activation message comprises an identity of a forbidden window to be activated, the forbidden window to be activated is a window within which a beam with a same pointing area as that of a first forbidden beam is forbidden, wherein the first forbidden beam is a beam with a CLI value greater than a first preset CLI threshold; in response to determining that a next frame structure period is reached, invalidating a validated forbidden window and validating the forbidden window to be activated according to the first activation message; receiving, within a validated forbidden window, data transmitted by user equipment by using beams in any direction; forbidding, outside the validated forbidden window, receiving data transmitted by the user equipment by using the beam with the same pointing area as that of the first forbidden beam.

60. The apparatus according to claim 59, wherein the first activation message further comprises first configuration information of the forbidden window to be activated, which indicates slots occupied by the forbidden window to be activated;
the second reception unit is specifically to validate the forbidden window to be activated in the slots indicated by the first configuration information of the forbidden window to be activated.

61. The apparatus according to claim 59, wherein there are one or more forbidden windows, and the apparatus further comprises:
a first activating unit, to validate, after receiving first configuration information of the forbidden windows sent by the controller, a default forbidden window in all the forbidden windows based on the received first configuration information of the forbidden windows, wherein the first configuration information of each forbidden window indicates slots occupied by the forbidden window.

62. The apparatus according to claim 61, wherein the first configuration information of each forbidden window comprises one or more configuration parameters selected from: a reference sub carrier space SCS of the forbidden window, a length of the forbidden window, a period of the forbidden window and an offset of the forbidden window in one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

63. The apparatus according to claim 62, wherein the forbidden window does not exceed the last slot in the frame structure period.

64. The apparatus according to any one of claims 51-57, wherein in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;
in response to determining that the victim base station is a full-duplex base station and the aggressor base station is a half-duplex base station, the interference measurement window occupies any one or more continuous designated slots which are downlink slots of the aggressor base station; and
in response to determining that the victim base station is a half-duplex base station and the aggressor base station is a full-duplex base station, the interference measurement window occupies any one or more continuous designated slots which are uplink slots of the victim base station.

65. The apparatus according to any one of claims 51-57, wherein there are one or more interference measurement windows, and a validated interference measurement window is used for measuring CLI; and the apparatus further comprises:
a second activation unit, to validate, after receiving second configuration information of the interference measurement windows sent by a controller, a default interference measurement window in all the interference measurement windows based on the received second configuration information of the interference measurement windows, wherein the second configuration information of each interference measurement window indicates slots occupied by the interference measurement window.

66. The apparatus according to any one of claims 51-57, wherein there are one or more interference measurement windows, and second configuration information of each interference measurement window comprises one or more configuration parameters selected from: a reference sub carrier space SCS of the interference measurement window, a length of the interference measurement window, a period of the interference measurement window and an offset of the interference measurement window in one frame structure period;

the reference SCS of the interference measurement window is a fixed SCS or a SCS of the victim base station;
the length of the interference measurement window is smaller than or equal to the frame structure period;
the period of the interference measurement window is an integer multiple of the frame structure period;
the offset of the interference measurement window in one frame structure period does not exceed a last slot in the frame structure period.

67. The apparatus according to claim 66, wherein the interference measurement window does not exceed the last slot in the frame structure period.

68. The apparatus according to any one of claims 51-57, wherein the apparatus further comprises:
a third reception unit, to receive first resource configuration information sent by a controller, wherein the first resource configuration information comprises an identity of the first resource configuration information and second resource configuration information of each aggressor base station, and the identity of the first resource configuration information corresponds to the victim base station one by one, and the second resource configuration information of each aggressor base station indicates time-frequency domain resources occupied by each measurement signal in the aggressor base station.

69. The apparatus according to claim 68, wherein all measurement signals transmitted by each aggressor base station comprise a synchronization signal block SSB corresponding to a coarse beam and/or a channel state information-reference signal CSI-RS corresponding to a fine beam; and a plurality of fine beams are comprised in a range of the coarse beam.

70. The apparatus according to claim 69, wherein the second resource configuration information of each aggressor base station comprises an indication parameter corresponding to the CSI-RS, and the indication parameter indicates that the CSI-RS is used for measuring CLI.

71. An apparatus for measuring cross link interference, applied to an aggressor base station, wherein at least one measurement signal is configured in the aggressor base station, time-frequency domain resources occupied by some or all of the at least one measurement signal are within an interference measurement window, the at least one measurement signal corresponds to beams one by one, and different beams have different directions; the apparatus comprises:

an acquisition unit, to obtain second resource configuration information of the aggressor base station, wherein the second resource configuration information indicates time-frequency domain resources occupied by the at least one measurement signal;
a transmission unit, to transmit the at least one measurement signal to a victim base station by using different beams according to the second resource configuration information.

72. The apparatus according to claim 71, wherein the acquisition unit is specifically to:
receive the second resource configuration information of the aggressor base station sent by a controller.

73. The apparatus according to claim 71 or 72, wherein all measurement signals transmitted by the aggressor base station comprise a synchronization signal block SSB corresponding to a coarse beam and/or a channel state information-reference signal CSI-RS corresponding to a fine beam; and a plurality of fine beams are comprised in a range of the coarse beam.

74. The apparatus according to claim 73, wherein the second resource configuration information of the aggressor base station comprises an indication parameter corresponding to the CSI-RS, and the indication parameter indicates that the CSI-RS is used for measuring cross link interference CLI.

75. The apparatus according to claim 71, wherein the apparatus further comprises:

a first reception unit, to receive a beam measurement result set, sent by a controller, obtained by measuring cross link interference CLI via each victim base station, wherein the beam measurement result set comprises a second forbidden beam list and a second preferred beam list, wherein the second forbidden beam list comprises an identity of a measurement signal corresponding to each second forbidden beam in the aggressor base station, and the second preferred beam list comprises an identity of a measurement signal corresponding to each second preferred beam in the aggressor base station; and the second forbidden beam is a beam to be forbidden, and the second preferred beam is a beam to be recommended; and/or a second reception unit, to receive a third activation message sent by the controller, wherein the third activation message comprises an identity of a forbidden window to be activated, and the forbidden window to be activated is a window within which the second forbidden beam is forbidden; in response to determining that a next frame structure period is reached, invalidating a validated forbidden window and validating the forbidden window to be activated according to the third activation message; within the validated forbidden window, forbidding transmitting data to user equipment by using the second forbidden beam, and transmitting data to the user equipment by using the second preferred beam; outside the validated forbidden window, transmitting data to the user equipment by using beams in any direction.

76. The apparatus according to claim 75, wherein there are one or more forbidden windows, and the apparatus further comprises:
an activating unit, to validate, after receiving first configuration information of the forbidden windows sent by the controller, a default forbidden window in all the forbidden windows based on the received first configuration information of the forbidden windows, wherein the first configuration information of each forbidden window indicates slots occupied by the forbidden window.

77. The apparatus according to claim 75, wherein the third activation message further comprises first configuration information of the forbidden window to be activated, which indicates slots occupied by the forbidden window to be activated;
the second reception unit is specifically to validate the forbidden window to be activated in slots indicated by the first configuration information of the forbidden window to be activated.

78. The apparatus according to any one of claims 75-77, wherein a ratio of the second forbidden beam to all beams in the aggressor base station is smaller than a preset ratio.

79. The apparatus according to any one of claims 75-77, wherein the first configuration information of each forbidden window comprises one or more configuration parameters selected from: a reference sub carrier space SCS of the forbidden window, a length of the forbidden window, a period of the forbidden window and an offset of the forbidden window in one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

80. The apparatus of claim 79, wherein the forbidden window does not exceed the last slot in the frame structure period.

81. The apparatus according to claim 71, wherein in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;
in response to determining that the victim base station is a full-duplex base station and the aggressor base station is a half-duplex base station, the interference measurement window occupies any one or more continuous designated slots which are downlink slots of the aggressor base station; and

in response to determining that the victim base station is a half-duplex base station and the aggressor base station is a full-duplex base station, the interference measurement window occupies any one or more continuous designated slots which are uplink slots of the victim base station.

82. The apparatus according to claim 71, wherein there are one or more interference measurement windows, and a validated interference measurement window is used for measuring CLI; second configuration information of each interference measurement window comprises one or more configuration parameters selected from: a reference sub carrier space SCS of the interference measurement window, a length of the interference measurement window, a period of the interference measurement window and an offset of the interference measurement window in one frame structure period;

the reference SCS of the interference measurement window is a fixed SCS or a SCS of the victim base station; the length of the interference measurement window is smaller than or equal to the frame structure period; the period of the interference measurement window is an integer multiple of the frame structure period; and the offset of the interference measurement window in one frame structure period does not exceed a last slot in the frame structure period.

83. The apparatus according to claim 82, wherein the interference measurement window does not exceed the last slot in the frame structure period.

84. An apparatus for measuring cross link interference, applied to a controller, the apparatus comprising:

an acquisition unit, to obtain second configuration information of an interference measurement windows in a victim base station and second resource configuration information for measurement signals of each aggressor base station, wherein the second configuration information indicates slots occupied by the interference measurement windows, and the second resource configuration information of each aggressor base station indicates time-frequency domain resources occupied by each measurement signal in the aggressor base station; the measurement signals correspond to beams one by one in each aggressor base station, and different beams have different directions; and

a first sending unit, to send the second configuration information to the victim base station, sending the second resource configuration information for each aggressor base station to the aggressor base station, and sending first resource configuration information to the victim base station, wherein the first resource configuration information comprises an identity of the first resource configuration information and the second resource configuration information of each aggressor base station, and the identity of the first resource configuration information corresponds to the victim base station one by one.

85. The apparatus according to claim 84, wherein the second configuration information comprises one or more configuration parameters selected from: a reference sub carrier space SCS of an interference measurement window, a length of an interference measurement window, a period of an interference measurement window and an offset of an interference measurement window in one frame structure period;

the reference SCS of the interference measurement window is a fixed SCS or a SCS of the victim base station; the length of the interference measurement window is smaller than or equal to the frame structure period; the period of the interference measurement window is an integer multiple of the frame structure period; the offset of the interference measurement window in one frame structure period does not exceed a last slot in the frame structure period.

86. The apparatus according to claim 85, wherein the interference measurement window does not exceed the last slot in the frame structure period.

87. The apparatus according to claim 84, wherein in response to determining that the victim base station and the aggressor base station are full-duplex base stations, the interference measurement window occupies any one or more continuous slots;

in response to determining that the victim base station and the aggressor base station are half-duplex base stations, the interference measurement window occupies any one or more continuous designated slots which are flexible slots, or are uplink slots of the victim base station and downlink slots of the aggressor base station;

in response to determining that the victim base station is a full-duplex base station and the aggressor base station is a half-duplex base station, the interference measurement window occupies any one or more continuous designated slots which are downlink slots of the aggressor base station; and

in response to determining that the victim base station is a half-duplex base station and the aggressor base station is a full-duplex base station, the interference measurement window occupies any one or more continuous designated slots which are uplink slots of the victim base station.

88. The apparatus according to claim 84, wherein there are one or more interference measurement windows, and a validated interference measurement window is used for measuring CLI; and the apparatus further comprises:

a second sending unit, to send a second activation message to the victim base station, wherein the second activation message comprises an identity of an interference measurement window to be activated.

89. The apparatus according to claim 84, wherein all measurement signals transmitted by each aggressor base station comprise a synchronization signal block SSB corresponding to a coarse beam and/or a channel state information-reference signal CSI-RS corresponding to a fine beam; and a plurality of fine beams are comprised in a range of the coarse beam.

90. The apparatus according to claim 89, wherein the second resource configuration information of each aggressor base station comprises an indication parameter corresponding to the CSI-RS, and the indication parameter indicates that the CSI-RS is used for measuring CLI.

91. The apparatus according to claim 84, wherein there are one or more victim base stations, and the apparatus further comprises:

a reception unit, to receive a beam measurement result obtained through measuring the cross link interference CLI transmitted by each victim base station; and

a determination unit, to determine a second forbidden beam and a second preferred beam in each aggressor base station according to each beam measurement result, wherein the second forbidden beam is a beam to be forbidden and the second preferred beam is a beam to be recommended.

92. The apparatus according to claim 91, wherein,

the beam measurement result comprises an identity of the aggressor base station, an identity of each measurement signal and a CLI value of a beam corresponding to each measurement signal; or

the beam measurement result comprises an identity of the aggressor base station, a first forbidden beam list and a first preferred beam list, wherein the first forbidden beam list comprises an identity of a measurement signal corresponding to each first forbidden beam, and the first preferred beam list comprises an identity of a measurement signal corresponding to each first preferred beam, wherein the first forbidden beam is a beam with a CLI value greater than a first preset CLI threshold, and the first preferred beam is a beam with a CLI value smaller than a second preset CLI threshold; or

the beam measurement result comprises an identity of the aggressor base station, a first forbidden beam list and a first preferred beam list, wherein the first forbidden beam list comprises an identity of a measurement signal corresponding to each first forbidden beam and a CLI value of each first forbidden beam, and the first preferred beam list comprises an identity of a measurement signal corresponding to each first preferred beam and a CLI value of each first preferred beam.

93. The apparatus according to claim 92, wherein the determination unit is specifically to:

determine a beam corresponding to each first measurement signal as the second forbidden beam in the aggressor base station that transmits the first measurement signal, wherein the first measurement signal is a measurement signal whose identity is comprised in any first forbidden beam list; and

determine a beam corresponding to each second measurement signal as the second preferred beam in the aggressor base station that transmits the second measurement signal, wherein the second measurement signal is a measurement signal whose identity is not comprised in any first forbidden beam list, but is comprised in any first preferred beam list.

94. The apparatus according to claim 92, wherein the determination unit is specifically to determine, in response to determining that the beam measurement result does not comprise the first forbidden beam list and the first preferred beam list, the second forbidden beam and the second preferred beam in each aggressor base station according to a CLI value comprised in each beam measurement result.

95. The apparatus according to claim 94, wherein the determination unit is specifically to:

determine, in response to determining that any target CLI value of a measurement signal is greater than a first preset CLI threshold, that a beam corresponding to the measurement signal is the second forbidden beam in the aggressor base station that transmits the measurement signal; and
determine, in response to determining that each target CLI value of a measurement signal is smaller than or equal to the first preset CLI threshold and any target CLI value of the measurement signal is smaller than a second preset CLI threshold, that a beam corresponding to the measurement signal is the second preferred beam in the aggressor base station that transmits the measurement signal;
wherein, in response to determining that the CLI value comprised in the beam measurement result is a current reference signal received power RSRP of a measurement signal, the target CLI value is the current RSRP comprised in the beam measurement result, or the target CLI value is a RSRP determined according to the current RSRP comprised in the beam measurement result and a historical RSRP;
in response to determining that the CLI value comprised in the beam measurement result is the RSRP determined according to the current RSRP and the historical RSRP, the target CLI value is the RSRP comprised in the beam measurement result.

96. The apparatus according to any one of claims 91-95, wherein in each aggressor base station, a ratio of the second forbidden beam to all beams in the aggressor base station is smaller than a preset ration; and
in each aggressor base station, a number of times that the second forbidden beam is forbidden is greater than a number of times that other beams in the aggressor base station are forbidden.

97. The apparatus according to claim 91, wherein the apparatus further comprises:

a third sending unit, to send a first activation message to a target victim base station and a third activation message to a target aggressor base station, wherein the first activation message and the third activation message comprise an identity of a forbidden window to be activated; the forbidden window to be activated in the target victim base station is a window within which a beam with a same pointing area as that of a first forbidden beam is forbidden, and the forbidden window to be activated in the target aggressor base station is a window within which the second forbidden beam is forbidden, wherein the first forbidden beam is a beam with a CLI value, which is measured by the target victim base, greater than a first preset CLI threshold; the target victim base station is a victim base station with the first forbidden beam therein and the target aggressor base station is an aggressor base station with a second forbidden beam therein; and/or
a fourth sending unit, to send a beam measurement result set obtained by measuring the CLI via each victim base station to the target aggressor base station, wherein the beam measurement result set comprises a second forbidden beam list and a second preferred beam list, wherein the second forbidden beam list comprises an identity of a measurement signal corresponding to each second forbidden beam in the target aggressor base station, and the second preferred beam list comprises an identity of a measurement signal corresponding to each second preferred beam in the target aggressor base station.

98. The apparatus according to claim 97, wherein the first activation message and the third activation message further comprise first configuration information of the forbidden window to be activated, which indicates slots occupied by the forbidden window to be activated.

99. The apparatus according to claim 97, wherein first configuration information of each forbidden window comprises one or more configuration parameters selected from: a reference sub carrier space SCS of the forbidden window, a length of the forbidden window, a period of the forbidden window and an offset of the forbidden window in one frame structure period;

the reference SCS of the forbidden window is a SCS of the aggressor base station;
the length of the forbidden window is smaller than or equal to the frame structure period;
the period of the forbidden window is an integer multiple of the frame structure period;
the offset of the forbidden window in one frame structure period does not exceed a last slot in the frame structure period.

**100.**

The apparatus according to claim 99, wherein the forbidden window does not exceed the last slot in the frame structure period.

**101.**

A base station comprising a processor, a communication interface, a memory and a communication bus, wherein the processor, the communication interface and the memory communicate with each other through the communication bus;

the memory is to store computer programs;
the processor is to carry out, when executing the programs stored in the memory, the method according to any one of claims 1-20 or 21-33.

**102.**

A controller comprising a processor, a communication interface, a memory and a communication bus, wherein the processor, the communication interface and the memory communicate with each other through the communication bus;

the memory is to store computer programs;
the processor is to carry out, when executing the programs stored in the memory, the method according to any one of claims 34-50.

**103.**

A computer-readable storage medium having computer programs stored therein, wherein the computer programs, when executed by a processor, carry out the method according to any one of claims 1-20, 21-33 or 34-50.

gNB-gNB
CLI

gNB0

| slot | 0 | 1 | 2 | 3 | 4 |
|---|---|---|---|---|---|
| frame structure | D | D | D | S | U |

DL

UL

UE-UE
CLI

UE1

gNB1

| 0 | 1 | 2 | 3 | 4 | slot |
|---|---|---|---|---|---|
| D | S | U | U | U | frame structure |

UE0

FIG. 1

| receiving within an interference measurement window, different measurement signals transmitted by an aggressor base station using different beams, the measurement signals correspond to the beams one by one, and the different beams have different directions | S21 |
|---|---|
| measuring, for each measurement signal, a CLI value of a beam corresponding to the measurement signal | S22 |

FIG. 2

FIG. 3

FIG. 4

| D | F | F | F | U |
|---|---|---|---|---|

aggressor base station cell 1 | SSB SSB | SSB SSB | | | |

aggressor base station cell 2 | SSB | | | | |

aggressor base station cell 3 | SSB SSB | SSB SSB | | | |

victim base station cell 4 | | interference measurement window | | | |

FIG. 5

receiving within an interference measurement window, different measurement signals transmitted by an aggressor base station using different beams, wherein the measurement signals correspond to the beams one by one, and the different beams have different directions — S61

measuring, for each measurement signal, a CLI value of a beam corresponding to the measurement signal — S62

generating a beam measurement result based on a CLI value of each beam — S63

sending the beam measurement result to the controller — S64

FIG. 6

obtaining second resource configuration information of the aggressor base station, wherein the second resource configuration information indicates time-frequency domain resources occupied by the at least one measurement signal — S71

transmitting the measurement signal to a victim base station by using different beams according to the second resource configuration information — S72

FIG. 7

obtaining second configuration information of an interference measurement window in a victim base station and second resource configuration information for measurement signals of each aggressor base station, wherein the second configuration information indicates slots occupied by the interference measurement window, and the second resource configuration information of each aggressor base station indicates time-frequency domain resources occupied by each measurement signal in the aggressor base station; the measurement signals correspond to beams one by one in each aggressor base station, and different beams have different directions

S81

sending the second configuration information to the victim base station, sending the second resource configuration information for each aggressor base station to this aggressor base station, and sending first resource configuration information to the victim base station, wherein the first resource configuration information includes an identity of the first resource configuration information and the second resource configuration information of each aggressor base station, and the identity of the first resource configuration information corresponds to the victim base station one by one

82

FIG. 8

91          92

| first reception unit | measurement unit |

FIG. 9

101          102

| acquisition unit | transmission unit |

FIG. 10

111          112

| acquisition unit | first sending unit |

FIG. 11

processor — 121

124 —

memory — 123

communication interface — 122

FIG. 12

processor — 131

134 —

memory — 133

communication interface — 132

FIG. 13

## INTERNATIONAL SEARCH REPORT

| International application No. |
| --- |
| **PCT/CN2023/075513** |

| A. | CLASSIFICATION OF SUBJECT MATTER |
| --- | --- |

H04L1/00(2006.01)i; H04W 24/08(2009.01)i

According to International Patent Classification (IPC) or to both national classification and IPC

| B. | FIELDS SEARCHED |
| --- | --- |

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, ENTXTC, VEN: 交叉, 链路, 干扰, 测量, 受害, 受扰, 基站, 窗口, 配置, 时频, 时隙, 资源, 波束, 方向, CLI, RSRP, interference, measurement, configuration, window, slot, time, resource, beam, direction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114286376 A (CHINA TELECOM CORP., LTD.) 05 April 2022 (2022-04-05) description, paragraphs 52-96 | 1-7, 14-24, 31-40, 51-57, 64-74, 81-90, 101-103 |
| Y | CN 115699861 A (QUALCOMM INC.) 03 February 2023 (2023-02-03) description, paragraphs 61-63 and 174-179 | 1-7, 14-24, 31-40, 51-57, 64-74, 81-90, 101-103 |
| A | US 2020351690 A1 (QUALCOMM INCORPORATED) 05 November 2020 (2020-11-05) entire document | 1-103 |
| A | US 2022116129 A1 (APPLE INC.) 14 April 2022 (2022-04-14) entire document | 1-103 |
| A | WO 2018126792 A1 (ZTE CORP.) 12 July 2018 (2018-07-12) entire document | 1-103 |
| A | VIVO. "Enhancement to Resource Multiplexing between Child and Parent Links" *3GPP TSG RAN WG1 #106bis-e R1-2108995*, 19 October 2021 (2021-10-19), entire document | 1-103 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 September 2023** | **11 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/075513**

**C. DOCUMENTS CONSIDERED TO BE RELEVANT**

| Category* | Citation of document, with indication, where appropriate, of the relevant passages | Relevant to claim No. |
|---|---|---|
| A | WO 2022250511 A1 (SAMSUNG ELECTRONICS CO., LTD.) 01 December 2022 (2022-12-01) entire document | 1-103 |

**INTERNATIONAL SEARCH REPORT**
Information on patent family members

International application No.

**PCT/CN2023/075513**

| Patent document cited in search report | | | Publication date (day/month/year) | Patent family member(s) | | | Publication date (day/month/year) |
|---|---|---|---|---|---|---|---|
| CN | 114286376 | A | 05 April 2022 | WO | 2023116285 | A1 | 29 June 2023 |
| CN | 115699861 | A | 03 February 2023 | WO | 2021248397 | A1 | 16 December 2021 |
| | | | | EP | 416589 | A1 | 19 April 2023 |
| | | | | US | 2023188229 | A1 | 15 June 2023 |
| US | 2020351690 | A1 | 05 November 2020 | US | 2021144577 | A1 | 13 May 2021 |
| | | | | WO | 2020222898 | A1 | 05 November 2020 |
| | | | | EP | 3963928 | A1 | 09 March 2022 |
| | | | | EP | 4033803 | A1 | 27 July 2022 |
| | | | | CN | 113748705 | A | 03 December 2021 |
| US | 2022116129 | A1 | 14 April 2022 | WO | 2020146891 | A1 | 16 July 2020 |
| | | | | KR | 20210103520 | A | 23 August 2021 |
| WO | 2018126792 | A1 | 12 July 2018 | CN | 108289311 | A | 17 July 2018 |
| WO | 2022250511 | A1 | 01 December 2022 | KR | 20220161089 | A | 06 December 2022 |

Form PCT/ISA/210 (patent family annex) (July 2022)